(19) Europäisches Patentamt / European Patent Office / Office européen des brevets

(11) **EP 4 242 277 B1**

(12) **EUROPÄISCHE PATENTSCHRIFT**

(45) Veröffentlichungstag und Bekanntmachung des Hinweises auf die Patenterteilung:
**10.04.2024 Patentblatt 2024/15**

(21) Anmeldenummer: **23159597.6**

(22) Anmeldetag: **02.03.2023**

(51) Internationale Patentklassifikation (IPC):
**C09J 7/30** (2018.01)  **C09J 7/10** (2018.01)
**C08K 5/1515** (2006.01)  **C09J 153/00** (2006.01)

(52) Gemeinsame Patentklassifikation (CPC):
(C-Sets verfügbar)
**C09J 153/00; C09J 7/10;** C09J 2453/00  (Forts.)

(54) **AUSHÄRTBARE KLEBEMASSE MIT VERBESSERTER STANZBARKEIT UND VERBESSERTEN SCHOCKEIGENSCHAFTEN**

CURABLE ADHESIVE COMPOUND WITH IMPROVED STAMPABILITY AND IMPROVED SHOCK PROPERTIES

MATIÈRE ADHÉSIVE DURCISSABLE AYANT UNE APTITUDE AU POINÇONNAGE AMÉLIORÉE ET DES PROPRIÉTÉS DE CHOC AMÉLIORÉES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **11.03.2022 DE 102022105737**

(43) Veröffentlichungstag der Anmeldung:
**13.09.2023 Patentblatt 2023/37**

(73) Patentinhaber: **tesa SE**
**22848 Norderstedt (DE)**

(72) Erfinder:
• **Schuh, Christian**
  **22848 Norderstedt (DE)**
• **Wedel, Nadine**
  **22848 Norderstedt (DE)**
• **Kruskop, Bastian**
  **22848 Norderstedt (DE)**
• **Naujoks, Lena-Marie**
  **22848 Norderstedt (DE)**
• **Erben, Nora**
  **22848 Norderstedt (DE)**

(74) Vertreter: **tesa SE**
**Hugo-Kirchberg-Straße 1**
**22848 Norderstedt (DE)**

(56) Entgegenhaltungen:
WO-A1-2010/029096    DE-A1-102006 042 816
DE-A1-102019 103 120

(52) Gemeinsame Patentklassifikation (CPC): (Forts.)

C-Sets
**C09J 153/00, C08K 5/1515, C08K 5/1515,
C08L 71/02, C08K 5/07**

**Beschreibung**

Die Erfindung betrifft eine aushärtbare Klebemasse und ein reaktives Klebeband umfassend eine entsprechende aushärtbare Klebemasse. Offenbart werden zudem die Verwendung entsprechender aushärtbarer Klebemasse und reaktiver Klebebänder zur Verklebung von zwei oder mehr Komponenten sowie ein Verfahren zur Herstellung entsprechender aushärtbarer Klebemassen.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar. Aus dem Alltag sind insbesondere Haftklebebänder bekannt, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Insbesondere für den Einsatz in der industriellen Fertigungstechnik ist jedoch auch eine weitere Art von Klebebändern von großer Bedeutung. In diesen Klebebändern, die teilweise auch als reaktive Klebebänder bezeichnet werden, wird eine aushärtbare Klebemasse eingesetzt. Entsprechende aushärtbare Klebemassen haben in dem für die Applikation vorgesehenen Zustand noch nicht ihren maximalen Vernetzungsgrad erreicht und können durch äußere Einflüsse ausgehärtet werden, indem die Polymerisation in der aushärtbaren Klebemasse initiiert und dadurch der Vernetzungsgrad erhöht wird. Hierbei verändern sich die mechanischen Eigenschaften der nunmehr ausgehärteten Klebemasse, wobei insbesondere die Viskosität, die Oberflächenhärte und die Festigkeit zunehmen. Aushärtbare Klebemassen sind im Stand der Technik bekannt und können aus chemischer Sicht sehr unterschiedliche Zusammensetzungen aufweisen. Diesen aushärtbaren Klebemassen ist gemein, dass die Vernetzungsreaktion durch externe Einflussfaktoren ausgelöst werden kann, beispielsweise durch Energiezufuhr, insbesondere durch Temperatur-, Plasma- oder Strahlenhärtung, und/oder den Kontakt mit einer die Polymerisation fördernden Substanz, wie es beispielsweise bei feuchtigkeitshärtenden Klebemassen der Fall ist. Entsprechende Klebemassen sind beispielsweise in der DE 102006042816 A1, DE 102019103120 A1, DE 102015222028 A1,

EP 3091059 A1, EP 3126402 B1, EP 2768919 B1, DE 102018203894 A1 und WO 2017174303 A1, US 4661542 A offenbart.

Die Aushärtbarkeit entsprechender aushärtbarer Klebmassen wird regelmäßig durch den Einsatz von polymerisierbaren Verbindungen erreicht, insbesondere von vernetzbaren Monomeren oder Oligomeren. Diese niedermolekularen polymerisierbaren Verbindungen, die zur Gewährleistung einer hinreichenden Aushärtbarkeit zumeist in einem signifikanten Massenanteil eingesetzt werden müssen, werden vom Fachmann teilweise auch als Reaktivharze bezeichnet. Die typischerweise eingesetzten niedermolekularen Reaktionsharze sind regelmäßig Flüssigkeiten mit einer niedrigen Viskosität. Dies führt in Kombination mit dem hohen Massenanteil in aushärtbaren Klebemassen dazu, dass entsprechende aushärtbare Klebemassen regelmäßig selbst eine niedrige Viskosität aufweisen. Hierdurch wird bedingt, dass die Verarbeitungseigenschaften vieler aushärtbarer Klebemassen aus dem Stand der Technik als unzureichend empfunden werden und in den typischen Verarbeitungsverfahren der Klebeindustrie ein vergleichsweise hoher Aufwand betrieben werden muss, um aushärtbare Klebemasse sinnvoll zu verarbeiten. Neben der Formstabilität der Haftklebemassen beim Aufwickeln von Klebebändern wird insbesondere die Stanzbarkeit, d.h. die Eignung für eine Vereinzelung von Klebeelementen mittels eines Stanzverfahrens regelmäßig als unzureichend bewertet.

Zum Zwecke einer bestmöglichen Verarbeitbarkeit beim Endanwender ist es auch bei aushärtbaren Klebemassen regelmäßig wünschenswert, dass diese selbst über zumindest schwach ausgeprägte haftklebrige Eigenschaften verfügen. Insbesondere ist es wünschenswert, dass reaktive Klebebänder vor der Aushärtung nötigenfalls im Wesentlichen rückstandsfrei entfernt werden können, beispielsweise wenn es zu einer fehlerhaften Applikation eines Klebebandes kam. Die durch den hohen Massenanteil an Reaktivharz bedingten Eigenschaften aushärtbarer Klebmassen resultieren jedoch häufig in einer unzureichenden Kohäsion in der aushärtbaren Klebemasse. Statt des gewünschten Adhäsionsversagens am Substrat kann es somit in vielen Fällen zu einem kohäsiven Versagen kommen, wodurch Rückstände der Klebemasse auf dem Substrat verbleiben.

Im Lichte der vorstehenden Ausführungen besteht im Bereich der Klebetechnik ein fortgesetztes Interesse daran, die Verarbeitungseigenschaften von aushärtbaren Klebemassen zu verbessern, wobei insbesondere die Stanzbarkeit verbessert und die Kohäsion im Material gesteigert werden soll.

Die aus dem Stand der Technik bekannten Maßnahmen zur Steigerung der Kohäsion und/oder zur Verringerung der Viskosität der aushärtbaren Klebemassen, verschlechtern jedoch in vielen Fällen die späteren Handhabungseigenschaften der reaktiven Klebebänder, da auch das in der Anwendung gewünschte Auffließverhalten, d.h. die Anpassung der aushärtbaren Klebemasse des reaktiven Klebebandes an die Struktur des Substrats, insbesondere bei rauen Substratoberflächen, nachteilig beeinflusst wird, sodass nach Aushärtung durch einen unzureichenden Kontakt mit dem Substrat ggf. eine Klebkraft erreicht wird, die den gestellten Anforderungen nicht entspricht. Vor diesem Hintergrund besteht im Bereich der aushärtbaren Klebemassen regelmäßig ein Zielkonflikt zwischen einer hinreichenden Kohäsion in der aushärtbaren Klebemasse sowie deren Verarbeitungseigenschaften bei der Herstellung von Klebebändern auf der einen Seite, sowie den Handhabungs- und Klebeigenschaften der resultierenden reaktiven Klebebänder auf der anderen Seite.

Zudem wird bei den aus dem Stand der Technik bekannten aushärtbaren Klebemassen und den entsprechenden reaktiven Klebebändern in vielen Fällen auch die Schockbeständigkeit als unzureichend empfunden, so dass ein Bedürfnis danach besteht, diese zu verbessern.

Die primäre Aufgabe der vorliegenden Erfindung war es, die vorstehend beschriebenen Nachteile des Standes der Technik zu beseitigen oder zumindest zu verringern.

Insbesondere war es die Aufgabe der vorliegenden Erfindung, eine aushärtbare Klebemasse anzugeben, bei der der vorstehend beschriebene Zielkonflikt zwischen einer hohen Kohäsion und einer guten Verarbeitbarkeit der Klebemasse, insbesondere einer guten Stanzbarkeit, auf der einen Seite sowie den Handhabungseigenschaften und der erreichbaren Klebkraft des reaktiven Klebebandes auf der anderen Seite bestmöglich gelöst wird.

Insoweit war es die Aufgabe der vorliegenden Erfindung, eine aushärtbare Klebemasse anzugeben, die trotz großer Massenanteile an Reaktivharz eine ausreichende Kohäsion zeigt, um im späteren Einsatz ein im Wesentlichen adhäsives Versagen beim Ablösen vom Substrat zu erreichen.

Es war eine Aufgabe der vorliegenden Erfindung, dass die anzugebenden aushärtbaren Klebemassen ein vorteilhaftes Auffließverhalten aufweisen sollten und auch auf Substraten mit rauen Oberflächen nach der Aushärtung eine ausgezeichnete Klebkraft erzielen sollten.

Es war eine weitere Aufgabe der vorliegenden Erfindung, dass die anzugebenden aushärtbaren Klebemassen im ausgehärteten Zustand eine ausgezeichnete Schockbeständigkeit aufweisen sollten.

Hierbei war es eine ergänzende Aufgabe der vorliegenden Erfindung, dass die anzugebenden Haftklebemassen idealerweise möglichst weitgehend unter Verwendung solcher Ausgangsmaterialien und Verfahren herstellbar sein sollten, welche im Bereich der Klebetechnik bereits zum Einsatz kommen, um eine zeit- und kosteneffiziente Herstellung zu ermöglichen.

Es war eine ergänzende Aufgabe der vorliegenden Erfindung, ein vorteilhaftes reaktives Klebeband bzw. Haftklebband bereitzustellen.

Zudem war es eine sekundäre Aufgabe der vorliegenden Erfindung, eine Verwendung der anzugebenden aushärtbaren Klebemassen bzw. reaktiver Klebebänder zur Verklebung von zwei oder mehr Komponenten sowie ein Verfahren zur Herstellung entsprechender aushärtbarer Klebemassen bereitzustellen.

Die Erfinder der vorliegenden Erfindung haben nunmehr gefunden, dass sich die vorstehend beschriebenen Aufgaben überraschenderweise lösen lassen, wenn in aushärtbaren Klebemassen, die als Reaktivharz eine spezifische Mischung aus flüssigen Epoxidverbindungen und festen bzw. hochviskosen Epoxidverbindungen einsetzen, eine vergleichsweise große Menge eines (Meth)acrylat-Blockcopolymers der allgemeinen Formel A-B-A eingesetzt wird, dessen A- und B-Blöcke spezifisch ausgewählt werden, wie es in den Ansprüchen definiert ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Klebebänder, Verwendungen und Verfahren ergeben sich aus den Merkmalen bevorzugter aushärtbarer Klebemasse.

Insoweit nachfolgend für ein Element, beispielsweise für die (Meth)acrylat-Blockcopolymere oder eine Epoxidverbindung, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft eine aushärtbare Klebemasse, umfassend bezogen auf die Masse der aushärtbaren Klebemasse:

a) ein oder mehrere (Meth)acrylat-Blockcopolymere des Aufbaus A-B-A in einem kombinierten Massenanteil von 25 % oder mehr,

wobei die A-Blöcke unabhängig voneinander für ein Poly(meth)acrylat mit einer Glasübergangstemperatur Tg von 50 °C oder mehr stehen, das herstellbar ist durch Polymerisation einer A-Monomerzusammensetzung aus A-Monomeren,

wobei der B-Block für ein Poly(meth)acrylat mit einer Glasübergangstemperatur Tg von weniger als 50 °C steht, das herstellbar ist durch Polymerisation einer B-Monomerzusammensetzung aus B-Monomere,

b) eine oder mehrere polymerisierbare erste Epoxidverbindungen E1 in einem kombinierten Massenanteil von 5 % oder mehr, wobei die erste Epoxidverbindung E1 bei 25 °C ein Feststoff oder ein hochviskoser Stoff mit einer dynamische Viskosität von 50 Pa s oder mehr ist, und

c) eine oder mehrere polymerisierbare zweite Epoxidverbindungen E2 in einem kombinierten Massenanteil von 5 % oder mehr, wobei die zweite Epoxidverbindung E2 bei 25 °C eine Flüssigkeit mit einer dynamischen Viskosität von 40 Pa s oder weniger ist,

wobei der stoffmengengewichtete polare Anteil der Hansen-Löslichkeitsparameter $<\delta_p>$ der von A-Monomeren abgeleiteten Monomereinheiten in den A-Blöcken $<\delta_p>$(A) im Bereich von 9,0 bis 11,0 MPa$^{0,5}$ liegt, und

wobei der stoffmengengewichtete polare Anteil der Hansen-Löslichkeitsparameter $<\delta_p>$ der von B-Monomeren abgeleiteten Monomereinheiten in den B-Blöcken $<\delta_p>$(B) weniger als 9 MPa$^{0,5}$ beträgt.

Hierbei dienen die rein kennzeichnenden Zusätze E1 und E2 einer klareren und leichteren Unterscheidung der beiden erfindungsgemäß einzusetzenden Arten von Epoxidverbindungen.

Diese vorstehend definierten Bestandteile werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die aushärtbare Klebemasse als zweite Epoxidverbindung E2 ausschließlich Epoxycyclohexylmethyl-3',4'-epoxycyclohexancarboxylat (dynamische Viskosität bei 25 °C etwa 0,25 Pa s) umfassen, was bedeuten würde, dass die aushärtbare Klebemasse eine Vielzahl der entsprechenden Moleküle umfasst.

In üblicher Weise werden die Massenanteile als kombinierte Massenanteile der einen oder der mehreren Komponenten angegeben, wodurch ausgedrückt wird, dass der Massenanteil der entsprechend ausgebildeten Komponenten zusammengenommen die entsprechenden Kriterien erfüllt, wobei für die (Meth)acrylat-Blockcopolymere, die ersten Epoxidverbindungen E1 und die zweiten Epoxidverbindungen E2 jeweils die Masse der aushärtbaren Klebemasse das Bezugssystem ist.

Die erfindungsgemäße aushärtbare Klebemasse ist aushärtbar. Durch die Möglichkeit zur Härtung kann die aushärtbare Klebemasse nach der Härtung als Strukturklebstoff fungieren. Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Blockcopolymere im Allgemeinen und (Meth)acrylat-Blockcopolymere im Speziellen sind aus dem Stand der Technik grundsätzlich bekannt, insbesondere auch Blockcopolymere mit dem Aufbau A-B-A. Die Herstellung von (Meth)acrylat-Blockcopolymeren, beispielsweise des Aufbaus A-B-A, ist im Stand der Technik beschrieben, wobei auch für die vorliegend einzusetzenden (Meth)acrylat-Blockcopolymere prinzipiell die aus dem Stand der Technik bekannten Verfahren zur Block-Copolymerisation eingesetzt werden können. Eine beispielhafte Übersicht über Blockcopolymere, die für unterschiedliche Zwecke u.a. in verschiedenen Klebemassen eingesetzt werden, findet sich beispielsweise in den Dokumenten US 2011003947 A1, US 20080200589 A1, US 2007078236 A1, US 2007078236 A1, US 2012196952 A1, US 2016032157 A1, US 2008146747 A1 und US 2016230054 A1.

In den erfindungsgemäß einzusetzenden (Meth)acrylat-Blockcopolymeren des Aufbaus A-B-A weisen die A-Blöcke eine höhere Glasübergangstemperatur auf als die B-Blöcke. In Anlehnung an die teilweise auch bei anderen Blockcopolymeren verwendete Terminologie werden die A-Blöcke zuweilen auch als sogenannte Hartblöcke bezeichnet, wohingegen der B-Block auch als Weichblock bezeichnet wird. Insoweit ist jedoch anzumerken, dass für die von den Erfindern identifizierten (Meth)acrylat-Blockcopolymere nach Einschätzung der Erfinder auch im B-Block prinzipiell höhere Glasübergangstemperaturen vorgesehen werden können als bei einigen aus dem Stand der Technik bekannten Weichblöcken. In Übereinstimmung mit dem fachmännischen Verständnis wird die Glasübergangstemperatur der A-Blöcke beziehungsweise des B-Blocks nicht am (Meth)acrylat-Blockcopolymer bestimmt, sondern an den isolierten (Co-)Polymeren der jeweiligen Blöcke.

Im Rahmen der vorliegenden Erfindung wird die Glasübergangstemperatur von Polymeren oder von Polymerblöcken in Blockcopolymeren mittels dynamischer Differenzkalorimetrie (DSC) bestimmt, wie es in der DIN EN ISO 11357 beschrieben ist. Dazu werden ca. 5 mg einer unbehandelten Polymerprobe in ein Aluminiumtiegelchen (Volumen 25 μL) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt. Die Bestimmung der Glasübergangstemperatur aus den DSC-Messungen ist für den Fachmann unproblematisch möglich und wird beispielsweise in der EP 2832811 A1 näher beschrieben.

Die zwei A-Blöcke der (Meth)acrylat-Blockcopolymere sind durch ein gemeinsames Kriterium für die Glasübergangstemperatur sowie durch die gemeinsame Herstellbarkeit aus den gleichen A-Monomeren gekennzeichnet. Der Fachmann versteht, dass die A-Blöcke herstellungsbedingt eine große Ähnlichkeit aufweisen, bedingt durch die Natur der zur Herstellung verwendeten Polymerisationsverfahren, insbesondere bei Einsatz von zwei oder mehr unterschiedlichen A-Monomeren, jedoch nicht exakt identisch sein müssen. Dies gilt analog zu den A- und B-Blöcke auch für die (Meth)acrylat-Blockcopolymer selbst, da der Fachmann im Bereich der polymeren Werkstoffe solche Blockcopolymere, die sich voneinander bezüglich der A- und B-Blöcken nur im Rahmen der herstellungsbedingten Variation unterscheiden, als ein gemeinsames Material, d.h. als ein (Meth)acrylat-Blockcopolymer, bezeichnen würde.

In Übereinstimmung mit dem fachmännischen Verständnis und dem üblichen Vorgehen im Bereich der Technik ist es zielführend, polymere und oligomere Verbindungen wie die A-Blöcke und den B-Block über das Herstellungsverfahren beziehungsweise die zur Herstellung verwendeten Ausgangsmaterialien zu definierten, da es unmöglich ist, die entsprechenden Materialien anders sinnvoll zu definieren.

In erfindungsgemäßen aushärtbaren Klebemassen werden (Meth)acrylat-Blockcopolymere eingesetzt, die aus Poly(meth)acrylat Blöcken bestehen. Diese (Meth)acrylat-Blockcopolymere bestehen somit zumindest teilweise aus Baueinheiten, die von (Meth)acrylat-Monomeren abgeleitet sind, wobei der Ausdruck (Meth)acrylat in Übereinstimmung mit dem fachmännischen Verständnis Acrylate und Methacrylate umfasst. Bevorzugt ist insoweit, wenn die (Meth)acrylat-Blockcopolymere und die entsprechenden Blöcke überwiegend oder sogar im Wesentlichen vollständig aus (Meth)acrylat-Monomeren hergestellt wurden.

Im Rahmen der vorliegenden Erfindung umfasst der Ausdruck "Poly(meth)acrylate" in Übereinstimmung mit dem fachmännischen Verständnis Polyacrylate und Polymethacrylate sowie Copolymere dieser Polymere. Poly(meth)acrylate können kleinere Mengen an Monomereinheiten enthalten, die sich nicht aus (Meth)acrylaten ableiten. Unter einem "Poly(meth)acrylat" wird im Rahmen der vorliegenden Erfindung entsprechend ein (Co-)Polymer verstanden, dessen Monomerbasis zu einem Massenanteil von 70 % oder mehr, bevorzugt 90 % oder mehr, besonders bevorzugt 98 % oder mehr, aus Monomeren besteht, die ausgewählt sind aus der Gruppe bestehend aus Acrylsäure, Methacrylsäure, Acrylsäureestern und Methacrylsäureestern, bezogen auf die Masse der Monomerbasis. Bevorzugt liegt der Massenanteil von Acrylsäureester und/oder Methacrylsäureester bei 50 % oder mehr, besonders bevorzugt 70 % oder mehr. Poly(meth)acrylate sind allgemein durch radikalische Polymerisation von Acryl- und/oder Methacryl-basierten Monomeren sowie gegebenenfalls weiteren copolymerisierbaren Monomeren zugänglich.

Die Herstellung solcher Poly(meth)acrylate aus den jeweiligen Monomeren kann nach den gängigen Verfahren erfolgen, insbesondere durch konventionelle radikalische Polymerisationen oder kontrollierte radikalische Polymerisationen, beispielsweise anionische Polymerisation, RAFT-, NMRP- oder ATRP-Polymerisation. Die Polymere bzw. Oligomere können durch Copolymerisation der monomeren Komponenten unter Verwendung der üblichen Polymerisationsinitiatoren sowie gegebenenfalls von Reglern hergestellt werden, wobei bei den üblichen Temperaturen beispielsweise in Substanz, in Emulsion, z.B. in Wasser oder flüssigen Kohlenwasserstoffen, oder in Lösung polymerisiert werden kann. Bevorzugt werden die Poly(meth)acrylate durch Polymerisation in Lösungsmitteln, besonders bevorzugt in Lösungsmitteln mit einer Siedetemperatur im Bereich von 50 bis 150 °C, besonders bevorzugt im Bereich von 60 bis 120 °C, unter Verwendung der üblichen Mengen an Polymerisationsinitiatoren, hergestellt, wobei die Polymerisationsinitiatoren der Monomerzusammensetzung im Allgemeinen in einem Anteil von etwa 0,01 bis 5 %, insbesondere von 0,1 bis 2 % zugesetzt werden, bezogen auf die Masse der Monomerzusammensetzung.

Geeignete Polymerisationsinitiatoren sind beispielsweise Radikalquellen wie Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat oder Benzpinacol. Besonders bevorzugt wird als radikalischer Polymerisationsinitiator 2,2'-Azobis(2-methylbutyronitril) oder 2,2'-Azobis(2-methylpropionitril) verwendet. Als Lösungsmittel kommen insbesondere Alkohole wie Methanol, Ethanol, n- und isoPropanol, n- und iso-Butanol, vorzugsweise Isopropanol und/oder Isobutanol, sowie Kohlenwasserstoffe wie Toluol und insbesondere Benzine mit einer Siedetemperatur im Bereich von 60 bis 120 °C in Frage. Insbesondere können Ketone, wie beispielsweise Aceton, Methylethylketon und Methylisobutylketon, und Ester, wie beispielsweise Essigsäureethylester, sowie Mischungen dieser Lösungsmittel eingesetzt werden.

Die in erfindungsgemäßen aushärtbaren Klebemassen einzusetzenden (Meth)acrylat-Blockcopolymere weisen einen spezifischen Polaritätsunterschied zwischen den A-Blöcken und dem B-Block auf, was im Rahmen der vorliegenden Erfindung in üblicher Weise über die stoffmengengewichteten polaren Anteile der Hansen-Löslichkeitsparameter $<\delta_p>$ der in den A- und B-Blöcken befindlichen Monomereinheiten ausgedrückt wird, die für die A-Blöcke in einem vergleichsweise engen Bereich liegen müssen, der jedoch wiederum höher liegt, als der entsprechende Wert der B-Blöcke.

Die resultierenden (Meth)acrylat-Blockcopolymere mit einem entsprechenden Polaritätsprofil sind dem Fachmann dabei als individuelle Komponente durchaus bekannt, wobei insbesondere die sogenannten MMA-BA-MMA-Blockcopolymere, d.h. A-B-A-Blockcopolymere mit A-Blöcken aus Polymethylmethacrylat und einem B-Block aus Poly-n-butylacrylat, kommerziell erhältlich sind und in vielen Branchen eingesetzt werden. Zudem sind auch andere Vertreter dieser (Meth)acrylat-Blockcopolymere kommerziell erhältlich, wie beispielsweise MMA-BA/2-EHA-MMA-Blockcopolymere, d.h. A-B-A-Blockcopolymere mit A-Blöcken aus Polymethylmethacrylat und einem B-Block aus einen Co-Polymer aus n-Butylacrylat und 2-Ethyhexylacrylat.

Auch im Bereich der Klebetechnik kommen (Meth)acrylat-Blockcopolymere mit einem entsprechenden Polaritätsprofil, insbesondere MMA-BA-MMA-Blockcopolymere, zuweilen schon als Additive in Klebemassen zum Einsatz, wobei sie zumeist die Funktion von sogenannten Schlagzähmodifizierern übernehmen. Trotz eines potentiell vorteilhaften Einflusses auf die Schlagzähigkeit wird der Zusatz dieser Komponenten für die wesentlichen klebtechnischen Eigenschaften jedoch regelmäßig nicht als vorteilhaft und in einigen Fällen sogar als nachteilig angesehen, so dass der Massenanteil dieser Schlagzähmodifizierer häufig möglichst niedrig gehalten wird und zumeist keine Massenanteile von mehr als 20 % eingesetzt werden. Vor allem in aushärtbaren Klebemassen, welche naturgemäß einen großen Anteil an polymerisierbaren Verbindungen, insbesondere flüssigen polymerisierbaren Verbindungen, umfassen, werden beim Einsatz von größeren Mengen an (Meth)acrylat-Blockcopolymere mit einem entsprechenden Polaritätsprofil häufig keine ausreichende Kohäsion in der Klebemasse und/oder kein zufriedenstellendes Auffließverhalten erreicht.

Insbesondere wegen der grundsätzlich positiven Eigenschaften dieser (Meth)acrylat-Blockcopolymere mit einem entsprechenden Polaritätsprofil wurde dieser Umstand stets als nachteilig empfunden. Insoweit ist es besonders überraschend, dass sich, wie von den Erfindern nunmehr erkannt, durch die Verwendung eines spezifischen Reaktivharzes, welches feste bzw. hochviskose Epoxidverbindungen in Kombination mit flüssigen Epoxidverbindungen umfasst, unerwarteterweise doch auch mit größeren Massenanteilen dieser (Meth)acrylat-Blockcopolymere aushärtbare Klebemassen mit einer guten Kohäsion und einem vorteilhaften Auffließverhalten erhalten lassen, welche dank der vorteilhaften Kohäsion überraschenderweise sogar haftklebrig ausgebildet werden können. Insoweit war es besonders überraschend, dass der große Massenanteil der entsprechenden (Meth)acrylat-Blockcopolymere hierbei nicht nachteilig wirkt, sondern sich im Gegenteil ein vorteilhaftes Verhalten im Zielkonflikt zwischen Kohäsion und Auffließverhalten ergibt, welches in synergistischer Weise mit einer vorteilhaften Schockbeständigkeit kombiniert ist. Dabei haben die Erfinder gefunden, dass insbesondere der Ausgestaltung des Polymers als Blockcopolymer eine wichtige Rolle zukommt, da sich die beobachteten Vorteile, insbesondere hinsichtlich der verbesserten Kohäsion, bei der Verwendung von statistisch verteilten Polymeren, welche ansonsten die gleichen Monomerbausteine in den gleichen Verhältnissen umfassen, überraschenderweise nicht zeigen. Überraschenderweise konnte damit auch eine hervorragende Schockbeständigkeit erreicht werden, auch ohne die Verwendung von Polyolen (als Offenzeitadditiv), die dem Fachmann bekannt sind zur Verbesserung der Schockeigenschaften von Klebemassen.

Nachfolgend wird nunmehr das Konzept der Hansen-Löslichkeitsparameter, deren Hintergrund und deren Berechnung erläutert, sowie beispielhafte Werte für solche Monomere angegeben, die im Bereich der Klebetechnik regelmäßig zum Einsatz kommen.

Eine in der Literatur bekannte Beschreibung von Löslichkeitsparametern erfolgt mittels des eindimensionalen Hildebrand-Parameters ($\delta$). Diese eindimensionalen $\delta$-Werte sind jedoch mit Fehlern behaftet, die bei polaren Verbindungen wie (Meth)acrylaten oder solchen, die Wasserstoffbrückenbindungen eingehen können, wie bspw. Acrylsäure, häufig groß sind. Da das Modell der eindimensionalen Hildebrand-Löslichkeitsparameter somit nur begrenzte Anwendung findet, wurde es durch Hansen weiterentwickelt (vgl. Hansen Solubility Parameters: A User's Handbook, Second Edition; Charles M. Hansen; 2007 CRC Press; ISBN 9780849372483).

Diese heutzutage vielfach verwendeten Hansen-Löslichkeitsparameter sind dreidimensionale Löslichkeitsparameter, die insbesondere im Bereich der Formulierung von Klebemassen häufig herangezogen werden, wie es beispielsweise in der WO 2019/106194 A1 oder der WO 2019/229150 A1 offenbart wird. Sie bestehen aus einem dispersen Anteil ($\delta_d$), einem Anteil aus polaren Wechselwirkungen ($\delta_p$) und einem Anteil für die Wasserstoffbrückenbindungen ($\delta_H$). Mit dem Hildebrand-Parameter $\delta$ hängen die Hansen-Löslichkeitsparameter wie folgt zusammen:

$$\delta^2 = \delta_d{}^2 + \delta_p{}^2 + \delta_H{}^2.$$

Die Werte für $\delta_d$, $\delta_p$ und $\delta_H$ können für Poly(meth)acrylate experimentell nicht direkt bestimmt, aber über Inkrementsysteme berechnet werden. Eine gängige und auch im Rahmen der vorliegenden Erfindung eingesetzte Methode ist die nach Stefanis/Panayiotou ("Prediction of Hansen Solubility Parameters with a New Group-Contribution Method"; Int. J. Thermophys. (2008) 29:568-585; Emmanuel Stefanis, Costas Panayiotou).

Gemäß der Gruppenbeitragsmethode nach Stefanis/Panayiotou werden zur Bestimmung der Hansen-Löslichkeitsparameter für Polymere die Löslichkeitsparameter der auf die einzelnen Monomere zurückzuführenden Monomereinheiten in den Polymeren, also die der Wiederholungseinheit in einer Polymerkette (d.h. ggf. ohne die polymerisierbare Doppelbindung der Monomere, stattdessen unter Berücksichtigung einer kovalenten s-Bindung, wie sie in der Polymerkette vorliegt) gemäß der Vorschrift in der genannten Schrift berechnet. Dabei ist für jede Gruppe in dem Baustein jeweils ein bestimmter Wert für den dispersen Anteil ($\delta_d$), den Anteil der polaren Wechselwirkungen ($\delta_p$) und den Wasserstoffbrückenbildungs-Anteil ($\delta_H$) tabelliert, siehe "Prediction of Hansen Solubility Parameters with a New Group-Contribution Method"; Int. J. Thermophys. (2008), "Tables" 3 bis 6, Seiten 578 bis 582.

Polyacrylsäure enthält beispielsweise die Wiederholungseinheit:

$$-[-CH_2-CHC(O)OH-]_n-.$$

Nach dem Inkrementsystem von Stefanis/Panayiotou ergeben sich die Hansen Löslichkeitsparameter (eine $CH_2$-Gruppe, eine CH-Gruppe und eine COOH-Gruppe) für den entsprechenden Baustein zu $\delta_d$ = 17,7, $\delta_p$ = 8,6 und $\delta_H$ = 11,1. Polybutylacrylat enthält beispielsweise die Wiederholungseinheit:

$$-[-CH_2-CHC(O)O(CH_2)_3CH_3-]_n-.$$

Mit vier $CH_2$-Gruppen, einer CH-Gruppe, einer COO-Gruppe und einer $CH_3$-Gruppe ergeben sich die Hansen Löslichkeitsparameter für den entsprechenden Baustein zu $\delta_d$ = 17,1, $\delta_p$ = 8,6 und $\delta_H$ = 6,5.

In der Gruppenbeitragsmethode nach Stefanis und Panayiotou werden komplexere organische Moleküle mit Hilfe von sogenannten Gruppen erster und zweiter Ordnung beschrieben. Die Gruppen erster Ordnung (n) bilden die grundlegende molekulare Struktur ab. Die Gruppen zweiter Ordnung (m) berücksichtigen die Konjugation der Gruppen erster Ordnung und erhöhen die Genauigkeit der Methode.

Für die vorliegende Erfindung sind nach Erkenntnis der Erfinder lediglich die polaren Anteile $\delta_p$ zu berücksichtigen. Diese können gemäß der folgenden Formel berechnet werden:

$$\delta_p = \left( \sum_i N_i C_i + \sum_j M_j D_j + 7{,}3548 \right) MPa^{0,5}$$

Die Tabellen 1 und 2 zeigen exemplarische Rechnungen für zwei beispielhafte Verbindungen (Epoxycyclohexylmethyl-3',4'-epoxycyclohexancarboxylat und 2-Hydroxy-3-phenoxypropylacrylat).

Tabelle 1 - Berechnung des polaren Anteils der Hansen-Löslichkeitsparameter $\delta_p$ für Epoxycyclohexylmethyl-3',4'-epoxycyclohexancarboxylat.

| $i$ | $N$ | Gruppe 1. Ordnung | $C$ |
|---|---|---|---|
| 1 | 1 | COO | 3,4637 |
| 2 | 7 | -$CH_2$ | -0,3045 |
| 3 | 6 | -CH< | 0,6491 |
| 4 | 2 | O | 3,3432 |
| $j$ | $M$ | Gruppe 2. Ordnung | $D$ |
| 1 | 2 | $C_6$-Ring | -3,6437 |
| Gesamt: 11,9806 $MPa^{0,5}$ | | | |

Tabelle 2 - Berechnung des polaren Anteils der Hansen-Löslichkeitsparameter $\delta_p$ für 2-Hydroxy-3-phenoxypropylacrylat.

| $i$ | $N$ | Gruppe 1. Ordnung | $C$ |
|---|---|---|---|
| 1 | 5 | ACH | -0,5303 |
| 2 | 1 | AC | 0,6187 |
| 3 | 1 | $CH_2O$ | 0,8826 |
| 4 | 1 | -CH< | 0,6491 |
| 5 | 1 | OH | 1,1404 |
| 6 | 1 | $-CH_2$ | -0,3045 |
| 7 | 1 | COO | 3,4637 |
| 8 | 1 | $CH_2=CH-$ | -2,0035 |
| $j$ | $M$ | Gruppe 2. Ordnung | $D$ |
| 1 | 1 | AC-O-C | 0,8153 |
| Gesamt: 9,9651 $MPa^{0,5}$ | | | |

Der Fachmann versteht, dass die Berechnung der Hansen-Löslichkeitsparameter der A- und B-Blöcke im Rahmen der vorliegenden Erfindung über die Bewertung der Monomereinheiten, d.h. der Wiederholungseinheiten in der Polymerkette, erfolgt, so dass gegenüber den zur Herstellung verwendeten Monomere, d.h. den A-Monomeren und den B-Monomeren, eine $CH_2=CH-$ Gruppe als $-CH_2-CH-$Gruppe berücksichtigt wird.

Gemäß den Vorgaben der Berechnungsmethode wird bei Einsatz von Mischungen an A-Monomeren beziehungsweise B-Monomeren bei der Herstellung von Co-Polymeren ein Mittelwert des polaren Anteils der Hansen-Löslichkeitsparameter gebildet, wobei die Beiträge der einzelnen Monomere über ihren Stoffmengenanteil gewichtet werden, so dass im Rahmen der vorliegenden Erfindung die stoffmengengewichteten polaren Anteile der Hansen-Löslichkeitsparameter $<\delta_p>$ betrachtet werden, die wie vorstehend erläutert gemäß der Gruppenbeitragsmethode nach Stefanis und Panayiotou berechnet werden.

Tabelle 3 gibt die polaren Anteile der Hansen-Löslichkeitsparameter beispielhaft für ausgewählte Monomere wieder, die im Bereich der aushärtbaren Klebemassen als Grundbausteine für Polymere eine hohe Relevanz haben.

Tabelle 3 - Polare Anteile der Hansen-Löslichkeitsparameter $\delta_p$ für beispielhafte Monomere (gerundet).

| Monomer | $\delta_p$ / $MPa^{0,5}$ |
|---|---|
| n-Butylacrylat | 8,60 |
| 2-Ethyhexylacrylat | 7,00 |
| Heptadecylacrylat | 1,55 |
| Ethylacrylat | 9,21 |
| Ethylendiglycolacrylate | 10,37 |
| Hydroxyethylacrylat | 12,00 |
| Laurylacrylat | 2,54 |
| Methoxyethylacrylat | 10,73 |
| Methylacrylat | 9,52 |
| 2-Phenoxyethylacrylat | 6,20 |
| 2-Phenoxydiethylenglocolacrylat | 9,36 |
| Propylheptylacrylat | 6,39 |
| Stearylacrylat | 1,70 |

(fortgesetzt)

| Monomer | $\delta_p$ / MPa$^{0,5}$ |
|---|---|
| n-Octylacrylat | 7,40 |
| Acrylsäure | 8,60 |
| Dihydrodicyclopentadienylacrylat | 4,60 |
| Isobornylacrylat | 6,10 |
| t-Butylacrylat | 9,50 |
| Methylmethacrylat | 9,31 |

Nach Einschätzung der Erfinder liegt der Fokus bei der Unterscheidung der A- und B-Blöcke im Rahmen der vorliegenden Erfindung vor allem auf den unterschiedlichen Polaritäten, die wie vorstehend beschrieben bewertet werden. Nichtsdestotrotz kommt auch der Glasübergangstemperatur eine ergänzende Bedeutung zu, wobei ausgehend von den Erkenntnissen der Erfinder die Grenze wie vorstehend definiert bei 50 °C gesehen werden kann. Nach Einschätzung der Erfinder ist es jedoch für die in der aushärtbaren Klebemasse zu erreichenden physikalisch-chemischen Eigenschaften vorteilhaft, wenn als A-Blöcke Hartblöcke mit einer vergleichsweise hohen Glasübergangstemperatur und als Weichblöcke entsprechend B-Blöcke mit einer relativ niedrigen Glasübergangstemperatur eingesetzt werden. Bevorzugt ist eine erfindungsgemäße aushärtbare Klebemasse, wobei die A-Blöcke unabhängig voneinander für ein Poly(meth)acrylat mit einer Glasübergangstemperatur Tg von mehr als 60 °C, bevorzugt mehr als 70 °C, besonders bevorzugt mehr als 80 °C, stehen, und/oder wobei der B-Block für ein Poly(meth)acrylat mit einer Glasübergangstemperatur Tg von weniger als 40 °C, bevorzugt weniger als 30 °C, besonders bevorzugt weniger als 20 °C, steht.

Wie vorstehend erläutert, ist es nicht zwangsläufig nötig und im Lichte der typischen Varianz bei der Herstellung von Polymeren auch nicht zu erwarten, dass die A-Blöcke in jedem (Meth)acrylat-Blockcopolymer identisch sind, sodass die vorstehende Definition letztlich nur eine minimale bzw. maximale Glasübergangstemperatur sowie die chemische Natur der monomeren Einheiten in den jeweiligen (Co-)Polymeren definiert. Der Fachmann versteht jedoch, dass insbesondere mit Blick auf fertigungstechnische Aspekte sowie hinsichtlich der Homogenität der physikalisch-chemischen Eigenschaften der damit herstellbaren aushärtbaren Klebemasse solche (Meth)acrylat-Blockcopolymere bevorzugt sind, in denen die A-Blöcke sich möglichst ähnlich sind, wobei es als besonders vorteilhaft angesehen wird, wenn die Herstellung der A-Blöcke so erfolgt, dass diese im Rahmen der typischen Varianz in der Polymerchemie im Wesentlichen identisch sind, beziehungsweise eine niedrige Polydispersität zeigen. In Übereinstimmung mit dem fachmännischen Verständnis ergeben sich besonders leistungsfähige (Meth)acrylat-Blockcopolymere, wenn die A-Blöcke unter identischen Polymerisationsbedingungen aus der gleichen A-Monomerzusammensetzung hergestellt werden. Bevorzugt ist vor diesem Hintergrund eine erfindungsgemäße aushärtbare Klebemasse, wobei die beiden A-Blöcke für Poly(meth)acrylate stehen, deren Glasübergangstemperatur sich um weniger als 5 °C, bevorzugt um weniger als 3 °C, besonders bevorzugt um weniger als 1 °C unterscheidet, wobei die Poly(meth)acrylate herstellbar sind durch Polymerisation der gleichen A-Monomerzusammensetzung aus A-Monomeren, wobei die A-Blöcke bevorzugt im Wesentlichen identisch sind.

Auch wenn der Einsatz von Co-Polymeren in den A- und B-Blöcken prinzipiell denkbar ist, potenziell auch mit zumindest geringen Anteilen von Monomeren, bei denen es sich nicht um (Meth)acrylat-basierte Monomere handelt, ist es nach Einschätzung der Erfinder für die weit überwiegende Zahl von Fällen bevorzugt, wenn die A- beziehungsweise B-Blöcke möglichst weitgehend (Meth)acrylat-basiert sind und insoweit überaus bevorzugt im Wesentlichen aus einem Typ von (Meth)acrylat-basierten Monomeren bestehen. Bevorzugt ist deshalb eine erfindungsgemäße aushärtbare Klebemasse, wobei die A-Monomere ein oder mehrere Monomere, bevorzugt ein Monomer, umfassen, die ausgewählt sind aus der Gruppe bestehend aus (Meth)acrylat-Monomeren und (Meth)acrylsäure, bevorzugt Methacrylat-Monomeren, wobei die A-Monomere bevorzugt zu 90 % oder mehr, besonders bevorzugt zu 95 % oder mehr, ganz besonders bevorzugt zu 99 % oder mehr, überaus bevorzugt im Wesentlichen vollständig, aus diesen Monomeren bestehen bezogen auf die kombinierte Masse der A-Monomere. Bevorzugt ist ebenfalls eine erfindungsgemäße aushärtbare Klebemasse, wobei die B-Monomere ein oder mehrere Monomere, bevorzugt ein Monomer, umfassen, die ausgewählt sind aus der Gruppe bestehend aus (Meth)acrylat-Monomeren und (Meth)acrylsäure, bevorzugt Acrylat-Monomeren und Acrylsäure, besonders bevorzugt Acrylat-Monomeren, wobei die B-Monomere bevorzugt zu 90 % oder mehr, besonders bevorzugt zu 95 % oder mehr, ganz besonders bevorzugt zu 99 % oder mehr, überaus bevorzugt im Wesentlichen vollständig, aus diesen Monomeren bestehen, bezogen auf die kombinierte Masse der B-Monomere. Insoweit ist besonders bevorzugt, wenn die vorstehenden Merkmale für die A-Monomere und B-Monomere in gleicher Weise beziehungsweise mit dem gleichen Grad der Bevorzugung eingestellt werden, wobei insbesondere bevorzugt ist, wenn die jeweiligen Monomere jeweils im Wesentlichen vollständig aus einem entsprechenden Monomer der angegebenen Typen gebildet sind. Die entsprechenden (Meth)acrylat-Blockcopolymere resultieren dabei nicht nur in ausgezeichneter Kohäsion in den aushärtbaren Klebemassen, sondern sind insbesondere auch besonders leicht, zuverlässig und reproduzierbar herzustellen, sodass insbesondere der Lagerungsaufwand reduziert werden kann und die Einstellung einer konstanten Produktqualität erleichtert wird.

Ausgehend von den vorstehenden Ausführungen ist es den Erfindern gelungen, besonders geeignete Monomere für die A-Monomere beziehungsweise die B-Monomere und damit für die chemische Natur der A- und B-Blöcke zu identifizieren, die nach Einschätzung der Erfinder in besonders leistungsstarken erfindungsgemäßen aushärtbaren Klebemassen resultieren, wobei die vorstehenden Ausführungen zur Ausbildung der A- und B-Blöcke als weitgehend reine Polymere entsprechend zutreffen. Bevorzugt ist nämlich eine erfindungsgemäße aushärtbare Klebemasse, wobei die A-Monomerzusammensetzung ein oder mehrere A-Monomere umfasst, die ausgewählt sind aus der Gruppe bestehend aus Methylmethacrylat, Ethylacrylat, Methylacrylat, 2-Phenoxydiethylenglocolacrylat und t-Butylacrylat, bevorzugt bestehend aus Methylmethacrylat und Ethylacrylat, besonders bevorzugt Methylmethacrylat, und/oder wobei die A-Monomerzusammensetzung Methylmethacrylat in einem Massenanteil von 80 % oder mehr, bevorzugt von 90 % oder mehr, besonders bevorzugt von 95 % oder mehr, ganz besonders bevorzugt von 98 % oder mehr, insbesondere bevorzugt von 99 % oder mehr, überausbevorzugt von im Wesentlichen 100 %, umfasst, bezogen auf die Masse der A-Monomerzusammensetzung, und/oder wobei die A-Blöcke unabhängig voneinander für ein Polymethylmethacrylat stehen. Bevorzugt ist zusätzlich oder alternativ eine erfindungsgemäße aushärtbare Klebemasse, wobei die B-Monomerzusammensetzung ein oder mehrere B-Monomere umfasst, die ausgewählt sind aus der Gruppe bestehend aus n-Butylacrylat, 2-Ethylhexylacrylat, n-Octylacrylat, Isobornylacrylat, 2-Phenoxyethylacrylat, Propylheptylacrylat und Acrylsäure, bevorzugt bestehend aus n-Butylacrylat, 2-Phenoxyethylacrylat und 2-Ethylhexylacrylat, besonders bevorzugt bestehend aus n-Butylacrylat und 2-Ethylhexylacrylat, ganz besonders bevorzugt n-Butylacrylat, und/oder wobei die B-Monomerzusammensetzung n-Butylacrylat und/oder 2-Ethylhexylacrylat, bevorzugt n-Butylacrylat, in einem kombinierten Massenanteil von 80 % oder mehr, bevorzugt von 90 % oder mehr, besonders bevorzugt von 95 % oder mehr, ganz besonders bevorzugt von 98 % oder mehr, insbesondere bevorzugt von 99 % oder mehr, überausbevorzugt von im Wesentlichen 100 %, umfasst, bezogen auf die Masse der B-Monomerzusammensetzung, und/oder wobei der B-Block für ein Poly-n-butylacrylat steht.

Die zahlenmittleren Molekulargewichte $M_n$ der (Meth)acrylat-Blockcopolymere liegen bevorzugt in einem Bereich von 20.000 bis 1.000.000 g/mol, besonders bevorzugt in einem Bereich von 90.000 bis 500.000 g/mol, ganz besonders bevorzugt in einem Bereich von 105.000 bis 150.000 g/mol. Die gewichtsmittleren Molekulargewichte $M_w$ der (Meth)acrylat-Blockcopolymere liegen bevorzugt in einem Bereich von 20.000 bis 1.000.000 g/mol, besonders bevorzugt in einem Bereich von 100.000 bis 500.000 g/mol, ganz besonders bevorzugt in einem Bereich von 115.000 bis 150.000 g/mol. Die Erfinder haben überraschenderweise festgestellt, dass sich die Schockbeständigkeit durch den Einsatz von höhermolekularen (Meth)acrylat-Blockcopolymeren in den erfindungsgemäßen Klebmassen verbessern lässt. Äußerst bevorzugt sind (Meth)acrylat-Blockcopolymeren deren zahlenmittleren Molekulargewichte $M_n$ in einem Bereich von 105.000 bis 150.000 g/mol und deren gewichtsmittleren Molekulargewichte $M_w$ einem Bereich von 115.000 bis 150.000 g/mol liegen. Hierbei besonders vorteilhaft sind (Meth)acrylat-Blockcopolymere mit einem A-Block- bzw. Poly(meth)acrylat-anteil von unter 20 %.

Die Angaben der zahlenmittleren Molmasse $M_n$ und der gewichtsmittleren Molekulargewichte $M_w$ beziehen sich dabei auf die Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Å, 8,0 mm * 50 mm (Angaben hier und im Folgenden in der Reihenfolge: Typ, Partikelgröße, Porosität, Innendurchmesser * Länge; 1 Å = $10^{-10}$ m) verwendet. Zur Auftrennung wird eine Kombination der Säulen des Typs PSS-SDV, 5 $\mu$m, $10^3$ Å sowie $10^5$ Å und $10^6$ Å mit jeweils 8,0 mm * 300 mm eingesetzt (Säulen der Firma Polymer Standards Service). Alternativ dazu können (zwei) Säulen des Typs PLgel 5 $\mu$m MIXDED-D, der Firma Agilent verwendet werden. Die Detektion erfolgt mittels Differentialrefraktometer Shodex RI71. Die Durchflussmenge beträgt 1,0 ml pro Minute. Die Kalibrierung erfolgt gegen PS-Standards (Polystyrol-Kalibrierung).

Im Rahmen der Entwicklung der Erfindung ist es den Erfindern gelungen, für die absoluten polaren Anteile des Hansen-Löslichkeitsparameters der A-Monomere und der B-Monomere besonders geeignete Bereiche zu identifizieren, mit denen sich besonders leistungsstarke aushärtbare Klebemassen realisieren lassen, wobei es insbesondere auch als vorteilhaft identifiziert wurde, wenn die Polarität des B-Blocks nicht zu stark von der der A-Blöcke abweicht. Die insoweit identifizierten Bereichsangaben sind nach Einschätzung der Erfinder besonders hilfreich dabei, schnell und zuverlässig neue (Meth)acrylat-Blockcopolymere für die jeweiligen Anwendungen zu konzipieren, da die entsprechenden polaren Anteile der Hansen-Löslichkeitsparameter vor dem Hintergrund dieser Offenbarung beispielsweise aus tabellierten Werten nachgeschlagen werden können. Bevorzugt ist insoweit zunächst eine erfindungsgemäße aushärtbare Klebemasse, wobei der stoffmengengewichtete polare Anteil der Hansen-Löslichkeitsparameter $<\delta_p>$ der von A-Monomeren abgeleiteten Monomereinheiten in den A-Blöcken $<\delta_p>(A)$ im Bereich von 9,1 bis 10,0 $MPa^{0,5}$, bevorzugt im Bereich von 9,2 bis 9,5 MPa$^{0,5}$, besonders bevorzugt im Bereich von 9,3 bis 9,4 MPa$^{0,5}$, liegt. Bevorzugt ist darüber hinaus zusätzlich oder alternativ eine erfindungsgemäße aushärtbare Klebemasse, wobei der stoffmengengewichtete polare Anteil der Hansen-Löslichkeitsparameter $<\delta_p>$ der von B-Monomeren abgeleiteten Monomereinheiten in den B-Blöcken $<\delta_p>$(B) im Bereich von 6,0 bis 8,9 MPa$^{0,5}$ bevorzugt im Bereich von 6,5 bis 8,8 MPa$^{0,5}$, besonders bevorzugt im Bereich von 7,0 bis 8,7 MPa$^{0,5}$, liegt, und/oder wobei der stoffmengengewichtete polare Anteil der Hansen-Löslichkeitsparameter $<\delta p>$ der von B-Monomeren abgeleiteten Monomereinheiten in den B-Blöcken $<\delta p>$(B) mehr als 6 MPa$^{0,5}$, bevorzugt mehr als 7 MPa$^{0,5}$, besonders bevorzugt mehr als 8 MPa$^{0,5}$, beträgt. Nach Einschätzung der Erfinder ist insoweit insbesondere vorteilhaft, wenn der Abstand in der Polarität in einem bestimmten, relativ engen Bereich liegt. Bevorzugt ist nämlich eine erfindungsgemäße aushärtbare Klebemasse, wobei die Differenz $<\delta_p>$(A) - $<\delta_p>$(B) im Bereich von 0,2 bis 2,0 MPa$^{0,5}$ bevorzugt im Bereich von 0,4 bis 1,5 MPa$^{0,5}$, besonders bevorzugt im Bereich von 0,6 bis 1,0 MPa$^{0,5}$, liegt.

Die erfindungsgemäße aushärtbare Klebemasse umfasst neben dem (Meth)acrylat-Blockcopolymer auch zumindest zwei unterschiedliche polymerisierbare Epoxidverbindungen, nämlich zumindest eine erste Epoxidverbindung E1 und zumindest eine zweite Epoxidverbindung E2 sowie optional weitere polymerisierbare Verbindungen. Diese Verbindungen bilden zusammen den vom Fachmann häufig als Reaktivharz bezeichneten Teil der aushärtbaren Klebemasse.

Der Ausdruck "polymerisierbar" bezieht sich hierbei in Übereinstimmung mit dem fachmännischen Verständnis auf die Fähigkeit dieser Verbindungen, ggf. nach geeigneter Aktivierung, eine Polymerisationsreaktion einzugehen. Im Falle der polymerisierbaren Epoxidverbindungen wird die Polymerisierbarkeit beispielsweise durch die Epoxid-Gruppen ermöglicht. Die Polymerisierbarkeit kann sich dabei auch dadurch ergeben, dass zwei oder mehr polymerisierbare Verbindungen vorliegen, die gemeinsam polymerisierbar sind, beispielsweise durch eine Polyaddition oder eine Polykondensation. Beispielhaft wäre hier die Kombination aus Epoxidverbindungen mit Dicyandiamid und/oder Imidazolen genannt.

In Übereinstimmung mit dem fachmännischen Verständnis sind Epoxidverbindungen solche Verbindungen, die zumindest eine Oxiran-Gruppe tragen. Sie können aromatischer oder aliphatischer, insbesondere cycloaliphatischer, Natur sein. Polymerisierbare Epoxidverbindungen können sowohl monomere als auch oligomere beziehungsweise polymere Epoxidverbindungen umfassen. Polymerisierbare Epoxidverbindungen weisen häufig im Durchschnitt wenigstens zwei Epoxidgruppen pro Molekül, vorzugsweise mehr als zwei Epoxidgruppen pro Molekül, auf. Bevorzugt ist entsprechend eine erfindungsgemäße aushärtbare Klebemasse, wobei die eine oder die mehreren ersten Epoxidverbindungen E1 und/oder die eine oder die mehreren zweiten Epoxidverbindungen E2, bevorzugt die ersten Epoxidverbindungen E1 und zweiten Epoxidverbindungen E2, ausgewählt sind aus der Gruppe bestehend aus Epoxidverbindungen mit zwei oder mehr Epoxidgruppen, bevorzugt zwei Epoxidgruppen.

Die oligomeren beziehungsweise polymeren Epoxidverbindungen umfassen zumeist lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht solcher Epoxidverbindungen kann von 58 bis etwa 100.000 g/mol oder mehr variieren, wobei das Molekulargewicht eine wichtige Stellgröße für die Einstellung der dynamischen Viskosität ist. Beispielhafte polymerisierbare Epoxidverbindungen umfassen Epoxycyclo-hexancarboxylate, wie beispielsweise 4-Epoxycyclohexylmethyl-3,4-epoxycyclohexancarboxylat, 3,4-Epoxy-2-methylcyclohexyl-methyl-3,4-epoxy-2-methylcyclohexancarboxylat und Bis(3,4-epoxy-6-methyl-cyclohexylmethyl)adipat. Weitere Beispiele für polymerisierbare Epoxidverbindungen sind beispielsweise in der US 3,117,099 A offenbart. Weitere polymerisierbare Epoxidverbindungen, die bei der Anwendung dieser Erfindung besonders nützlich sind, umfassen Glycidylethermonomere, wie sie beispielsweise in der US 3,018,262 offenbart sind. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Insbesondere Diglycidylether von Bisphenolen, wie z.B. Bisphenol-A (4,4'-(Propan-2,2-diyl)diphenol) und Bisphenol-F (Bis(4-hydroxyphenyl)methan). Solche Reaktionsprodukte sind kommerziell in unterschiedlichen Molekulargewichten und Aggregatzuständen erhältlich (beispielsweise sogenannte Typ 1 bis Typ 10 BADGE-Harze). Typische Beispiele für flüssige Bisphenol-A-Diglycidylether sind Epikote 828, D.E.R.331 und Epon 828. Typische feste BADGE-Harze sind Araldite GT 6071, GT 7072, Epon 1001 und D.E.R. 662. Weitere Umsetzungsprodukte von Phenolen mit Epichlorhydrin sind die Phenol- und Cresolnovolakharze wie z.B. die Epiclon Typen oder Araldite EPN und ECN Typen (z.B. ECN1273).

Aufbauend auf den vorstehenden Ausführungen ist es den Erfindern gelungen, polymerisierbare Epoxidverbindungen zu identifizieren, mit denen sich bei der Lösung des Zielkonflikts aus Kohäsion und Auffließverhalten besonders gute Ergebnisse erzielen lassen. Bevorzugt ist nämlich eine erfindungsgemäße aushärtbare Klebemasse, wobei die eine oder die mehreren ersten Epoxidverbindungen E1 und/oder die eine oder die mehreren zweiten Epoxidverbindungen E2, bevorzugt die ersten Epoxidverbindungen E1 und die zweiten Epoxidverbindungen E2, ausgewählt sind aus der Gruppe bestehend aus Epoxidverbindungen mit zumindest einer cycloaliphatischen Gruppe, insbesondere einer Cyclohexylgruppe oder Dicyclopentadienylgruppe, und/oder wobei die aushärtbare Klebemasse zumindest eine erste Epoxidverbindung E1 und/oder zumindest eine zweite Epoxidverbindung E2, bevorzugt zumindest eine erste Epoxidverbindung E1 und zumindest eine zweite Epoxidverbindung E2, umfasst, die ausgewählt sind aus der Gruppe bestehend aus Epoxidverbindungen mit zumindest einer cycloaliphatischen Gruppe, insbesondere einer Cyclohexylgruppe oder Dicyclopentadienylgruppe. Bevorzugt ist zusätzlich oder alternativ eine erfindungsgemäße aushärtbare Klebemasse, wobei die eine oder die mehreren ersten Epoxidverbindungen E1 und/oder die eine oder die mehreren zweiten Epoxidverbindungen E2, bevorzugt die ersten Epoxidverbindungen E1 und die zweiten Epoxidverbindungen E2, ausgewählt sind aus der Gruppe bestehend aus Bisphenol-A-Diglycidylethern und Bisphenol-F-Diglycidylethern, bevorzugt Bisphenol-A-Diglycidylethern, und/oder wobei die aushärtbare Klebemasse zumindest eine erste Epoxidverbindung E1 und/oder zumindest eine zweite Epoxidverbindung E2, bevorzugt zumindest eine erste Epoxidverbindung E1 und zumindest eine zweite Epoxidverbindung E2, umfasst, die ausgewählt sind aus der Gruppe bestehend aus Bisphenol-A-Diglycidylethern und Bisphenol-F-Diglycidylethern, bevorzugt Bisphenol-A-Diglycidylethern.

Ganz besonders bevorzugt ist es insoweit, wenn die beiden vorstehenden beschriebenen Merkmale der Epoxidverbindungen insoweit kombiniert werden, als dass Epoxidverbindungen mit zumindest einer cycloaliphatischen Gruppe durch Hydrierung von entsprechenden Bisphenolverbindungen erhalten werden, da insbesondere bei Einsatz zumindest einer solchen Epoxidverbindung, vor allem als flüssige Epoxidverbindung, aushärtbare Klebemassen erhalten werden, die die vorstehend beschriebenen Aufgaben besonders gut lösen. Hier haben die Erfinder überraschenderweise festgestellt, dass solche hydrierte Epoxidverbindungen höhere Verklebungsfestigkeiten aufweisen. Somit ist besonders bevorzugt eine erfindungsgemäße aushärtbare Klebemasse, wobei die eine oder die mehreren ersten Epoxidverbindungen E1 und/oder die eine oder die mehreren zweiten Epoxidverbindungen E2, bevorzugt die zweiten Epoxidverbindungen E2, ausgewählt sind aus der Gruppe bestehend aus hydrierten Bisphenol-A-Diglycidylethern und hydrierten Bisphenol-F-Diglycidylethern, bevorzugt hydrierten Bisphenol-A-Diglycidylethern, und/oder wobei die aushärtbare Klebemasse zumindest eine erste Epoxidverbindung E1 und/oder zumindest eine zweite Epoxidverbindung E2, bevorzugt zumindest eine zweite Epoxidverbindung E2, umfasst, die ausgewählt sind aus der Gruppe bestehend aus hydrierten Bisphenol-A-Diglycidylethern und hydrierten Bisphenol-F-Diglycidylethern, bevorzugt hydrierten Bisphenol-A-Diglycidylethern.

Die ersten polymerisierbaren Epoxidverbindungen E1 sind ausgewählt aus der Gruppe bestehend aus Verbindungen, die bei 25 °C Feststoffe oder hochviskose Stoffe sind, wobei letztere im Rahmen der vorliegenden Erfindung über eine Untergrenze der dynamischen Viskosität bei 25 °C definiert werden. Der Fachmann versteht insoweit, dass die Unterscheidung zwischen Feststoffen und entsprechenden hochviskosen Stoffen für die Anwendung in der Praxis zweckmäßig ist, da die Viskosität von Feststoffen intrinsisch mehrere Zehnerpotenzen über dem vorstehend angegebenen Wert der dynamischen Viskosität liegt, praktisch aber häufig kaum sinnvoll zu bestimmen ist, so dass es ausreichend ist festzustellen, dass es sich um einen Feststoff handelt. Durch die gewählte Definition besteht vorteilhafterweise auch keine Notwendigkeit zu unterscheiden, ob ein Stoff bei 25 °C nunmehr ein Feststoff oder ein hochviskoser Stoff mit einer entsprechenden dynamischen Viskosität ist. Bei den zweiten polymerisierbaren Epoxidverbindungen E2 handelt es sich im Gegensatz hierzu um niedrigviskose Flüssigkeiten, die im Rahmen der vorliegenden Erfindung über eine Obergrenze der dynamischen Viskosität bei 25 °C definiert werden. Im Rahmen der vorliegenden Erfindung wird die dynamische Viskosität dabei gemäß der DIN 53019-1 aus 2008; bei 25 °C, mit einer Schergeschwindigkeit von 1 s$^{-1}$ bestimmt.

Dabei haben die Erfinder erkannt, dass es besonders vorteilhaft ist, wenn die Differenz der Viskositäten zwischen den polymerisierbaren Epoxidverbindungen relativ groß gewählt wird. Bevorzugt ist deshalb eine erfindungsgemäße aushärtbare Klebemasse, wobei zumindest eine, bevorzugt sämtliche, der ersten Epoxidverbindungen E1 bei 25 °C eine dynamische Viskosität von 100 Pa s oder mehr, bevorzugt von 150 Pa s oder mehr, aufweisen, und/oder wobei zumindest eine, bevorzugt sämtliche, der zweiten Epoxidverbindungen E2 bei 25 °C eine dynamische Viskosität von 30 Pa s oder weniger, bevorzugt 20 Pa s oder weniger, ganz besonders bevorzugt 10 Pa s oder weniger, aufweisen. Hierbei werden besonders bevorzugt die entsprechenden bevorzugten Bereiche miteinander kombiniert.

Aus den vorstehenden Ausführungen folgt auch, dass der Einsatz von festen Epoxidverbindungen als erste Epoxidverbindung E1 wegen der resultierenden großen Diskrepanz in der dynamischen Viskosität besonders bevorzugt ist. Besonders bevorzugt ist deshalb eine erfindungsgemäße aushärtbare Klebemasse, wobei die eine oder die mehreren ersten Epoxidverbindungen E1 ein Feststoff mit einer Erweichungstemperatur von 45 °C oder mehr ist, und/oder wobei zumindest eine, bevorzugt sämtliche, der ersten Epoxidverbindungen E1 ein Feststoff mit einer Erweichungstemperatur von 45 °C oder mehr ist.

Es kann als Vorteil der erfindungsgemäßen aushärtbaren Klebemassen gesehen werden, dass diese hinsichtlich der Art der Aushärtung, insbesondere hinsichtlich der Wahl der Katalysatoren, sehr flexibel sind. Der Fachmann stimmt das zur Aushärtung verwendete Katalysatorsystem im Wesentlichen auf die Anwendungsanforderungen und die eingesetzten polymerisierbaren Verbindungen ab. Für die meisten relevanten Anwendungsfälle wird es in der Praxis entsprechend zielführend sein, wenn die erfindungsgemäße aushärtbare Klebemasse bereits zusätzlich einen oder mehreren Initiatoren umfasst.

Mit Blick auf die späteren Handhabungseigenschaften ist es nach Einschätzung der Erfinder besonders vorteilhaft, strahlungsvernetzende und/oder thermisch vernetzende Systeme einzusetzen, wobei insbesondere die Strahlungsaktivierung große handhabungstechnische Vorteile liefert. Bevorzugt ist entsprechend eine erfindungsgemäße aushärtbare Klebemasse, wobei die aushärtbare Klebemasse eine strahlungshärtende und/oder thermisch härtende Klebemasse, ist, und/oder wobei die aushärtbare Klebemasse durch Polymerisation der ersten Epoxidverbindungen E1 und der zweiten Epoxidverbindungen E2 aushärtbar ist, bevorzugt durch Strahlungsaktivierung und/oder thermische Aktivierung.

Prinzipiell bevorzugt ist insoweit eine erfindungsgemäße aushärtbare Klebemasse, wobei die aushärtbare Klebemasse einen oder mehrere Initiatoren umfasst, bevorzugt in einem kombinierten Massenanteil im Bereich von 0,05 bis 4 %, bevorzugt im Bereich von 0,1 bis 3 %, bezogen auf die Masse der aushärtbaren Klebemasse, und/oder wobei der eine oder die mehreren Initiatoren bevorzugt ausgewählt sind aus der Gruppe bestehend aus strahlungsaktivierten Initiatoren und thermisch aktivierten Initiatoren.

Beim vorliegend vorgesehenen Einsatz von polymerisierbaren Epoxidverbindungen im Reaktivharz erfolgt die Polymerisation bevorzugt mittels kationischer Polymerisation. Bevorzugt ist deshalb eine erfindungsgemäße aushärtbare Klebemasse, wobei der eine oder die mehreren Initiatoren ausgewählt sind aus der Gruppe bestehend aus strahlungsaktivierten Initiatoren und thermisch aktivierten Initiatoren. Bevorzugt ist deshalb auch eine erfindungsgemäße aushärtbare Klebemasse, wobei der eine oder die mehreren Initiatoren ausgewählt sind aus der Gruppe bestehend aus Initiatoren für die kationische Polymerisation. Besonders bevorzugt ist in der Kombination deshalb eine erfindungsgemäße aushärtbare Klebemasse, wobei der eine oder die mehreren Initiatoren ausgewählt sind aus der Gruppe bestehend aus strahlungsaktivierten Initiatoren für die kationische Polymerisation, beispielsweise Triarylsulfoniumhexafluoroantimonat.

Für die thermische Härtung werden zumeist sogenannte Härter und Beschleuniger verwendet. Im Rahmen der Erfindung bezeichnet der Ausdruck "Härter" dabei entsprechend DIN 55945: 1999-07 die -als Bindemittel wirkenden- chemischen Verbindungen, die den polymerisierbaren Verbindungen zugesetzt werden, um die Vernetzung der aushärtbaren Klebemasse zu bewirken. Der Härte bewirkt entsprechend die chemische Vernetzung wobei die Beschleuniger bei Anwesenheit eines Härters die Reaktionsgeschwindigkeit der Härtungsreaktion und/oder die Geschwindigkeit der Aktivierung der Härtung der Epoxidharze erhöhen. Härtungsreaktionen sind in der dynamischen Differenzkalometrie (DSC) grundsätzlich als Peak identifizierbar. Als Beschleuniger sind insbesondere solche Verbindungen zu verstehen, deren Zugabe den Härtungspeak eines bestimmten Härters zu niedrigeren Temperaturen verschiebt. Die Gesamtheit aus Härter und Beschleuniger wird vom Fachmann auch als Härtungsreagenz bezeichnet.

Die Listen der als Härter bzw. Beschleuniger einsetzbaren Substanzen überschneiden sich dabei, wobei die einzelnen Vertreter teilweise auch gleichzeitig beide Funktionsweisen realisieren können, so dass der Übergang zwischen Härter und Beschleuniger in der Regel fließend ist, ohne dass die Auswahl eines geeigneten Systems aus Härter und Beschleuniger den Fachmann vor große Herausforderungen stellt. Als Härter und/oder Beschleuniger können beispielsweise Verbindungen eingesetzt werden, die ausgewählt sind aus der Gruppe bestehend aus Dicyandiamiden, Imidazolen, Anhydriden, Epoxy-Amin-Addukten, Hydraziden und Reaktionsprodukten aus Disäuren und multifunktionellen Aminen. Als Reaktionsprodukte aus Disäuren und multifunktionellen Aminen kommen beispielsweise Reaktionsprodukte aus Phthalsäure und Diethylentriamin in Betracht. Stöchiometrische Härter wie beispielsweise Dicyandiamid werden bevorzugt auf die Epoxidmenge der Klebemasse bezogen eingesetzt. Nichtstöchiometrische Härter wie z.B. Imidazole und Epoxy-Amin-Addukte werden typischerweise in Anteilen von bis zu 20 % bezogen auf den Epoxidanteil verwendet.

Als Initiatoren für eine kationische UV induzierte Härtung von Epoxidverbindungen sind insbesondere Sulfonium, Iodonium und Metallocen basierende Systeme einsetzbar. Für Beispiele für Sulfonium basierende Kationen sei auf die Ausführungen in US 6,908,722 B1 verwiesen. Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Zudem sind insbesondere für Iodonium-basierende Initiatoren auch Chlorid, Bromid oder Iodid als Anionen denkbar, wobei aber Initiatoren, die im Wesentlichen frei von Chlor und Brom sind, bevorzugt sind. Ein leistungsfähiges Beispiel für ein solches System ist beispielsweise Triphenylsulfoniumhexafluoroantimonat. Weitere geeignete Initiatoren sind beispielsweise in der US 3,729,313 A, US 3,741,769 A, US 4,250,053 A, US 4,394,403 A, US 4,231,951 A, US 4,256,828 A, US 4,058,401 A, US 4,138,255 A und US 2010/063221 A1 offenbart.

Konkrete Beispiele für einsetzbare Sulfonium-Salze sind Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfoniumetrakis-(pentafluorobenzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecyl-phenyl)-sulfoniumtetrakis-(3,5-bis-trifluoromethylphenyl)-borat, 4-Acetamidphenyldiphenylsulfoniumtetrafluoroborat, 4-Acetamidphenyldiphenylsulfoniumtetrakis-(pentafluoro-benzyl)-borat, Dimethylnaphthylsulfoniumhexafluorophosphat, Trifluoromethyldiphenyl-sulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexafluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluoro-benzyl)-borat, 5-Methyl-10-oxothianthreniumtetrafluoroborat, 5-Methyl-10-oxothianthreniumtetrakis-(pentafluorobenzyl)-borat und 5-Methyl-10,10-dioxothianthreniumhexafluorophosphat,

Konkrete Beispiele für einsetzbare Iodonium-Salze sind Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyliodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bis-succinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bistrifluoromethylphenyl)-borat und (Tolylcumyl)-iodoniumtetrakis-(pentafluorophenyl)-borat, und Ferrocenium-Salze (siehe zum Beispiel EP 0 542 716 B1) wie η5-(2,4-cyclopentadien-1-yl)-[(1,2,3,4,5,6,9)-(1-methylethyl)-benzol]-eisen.

Photoinitiatoren werden typischerweise einzeln oder als Kombination von zwei oder mehreren Photoinitiatoren eingesetzt. Beim Einsatz von Photoinitiatoren sind Kombinationen mit sogenannten Sensitizern für die Anpassung der Aktivierungswellenlänge des Photoinitiationssystems an das gewählte Emissionsspektrum sehr hilfreich, für die auf dem Fachmann bekannte Literatur, wie z.B. "Industrial Photoinitiators: A technical guide" 2010 von A.W. Green, verwiesen wird. Typischerweise beträgt in diesen Fällen der Massenanteil von Photoinitiatoren an der aushärtbaren Klebemasse nicht mehr als 4 % aber mindestens 0,1 %, und liegt bevorzugt im Bereich von 0,5 bis 2 %. Der Massenanteil von Sensitizern beträgt üblicherweise nicht mehr als 3 % und liegt bevorzugt im Bereich von 0,5 bis 2 %.

Den Erfindern ist es gelungen, für die in erfindungsgemäßen aushärtbaren Klebemassen einzusetzenden Komponenten besonders günstige Massenanteile zu identifizieren, bei deren Umsetzung sich besonders leistungsstarke aushärtbare Klebemassen erhalten lassen, wobei es besonders überraschend war, dass sich auch größere Mengen an (Meth)acrylat-Blockcopolymer vorteilhaft auf die Klebeeigenschaften auswirken. Bevorzugt ist insoweit eine erfindungsgemäße aushärtbare Klebemasse, wobei der kombinierte Massenanteil der (Meth)acrylat-Blockcopolymere in der aushärtbaren Klebemasse 28 % oder mehr, bevorzugt 30 % oder mehr, besonders bevorzugt 33 % oder mehr, beträgt, und/oder wobei der kombinierte Massenanteil der (Meth)acrylat-Blockcopolymere in der aushärtbaren Klebemasse im Bereich von 28 bis 80 %, bevorzugt im Bereich von 30 bis 65 %, besonders bevorzugt im Bereich von 33 bis 55 %, liegt. Bevorzugt ist zusätzlich oder alternativ eine erfindungsgemäße aushärtbare Klebemasse, wobei der kombinierte Massenanteil der ersten Epoxidverbindungen E1 in der aushärtbaren Klebemasse 10 % oder mehr, bevorzugt 15 % oder mehr, besonders bevorzugt 20 % oder mehr, beträgt, und/oder wobei der kombinierte Massenanteil der ersten Epoxidverbindungen E1 in der aushärtbaren Klebemasse im Bereich von 5 bis 50 %, bevorzugt im Bereich von 10 bis 40 %, besonders bevorzugt im Bereich von 15 bis 30 %, liegt. Bevorzugt ist ebenfalls zusätzlich oder alternativ auch eine erfindungsgemäße aushärtbare Klebemasse, wobei der kombinierte Massenanteil der zweiten Epoxidverbindungen E2 in der aushärtbaren Klebemasse 10 % oder mehr, bevorzugt 20 % oder mehr, besonders bevorzugt 30 % oder mehr, beträgt, und/oder wobei der kombinierte Massenanteil der zweiten Epoxidverbindungen E2 in der aushärtbaren Klebemasse im Bereich von 10 bis 60 %, bevorzugt im Bereich von 20 bis 55 %, besonders bevorzugt im Bereich von 30 bis 45 %, liegt. Hierbei ist es besonders bevorzugt, wenn für zwei oder drei der Komponenten, bevorzugt für drei der Komponenten, die in gleicher Weise bevorzugten Bereiche eingestellt werden.

Die Aushärtungsgeschwindigkeit bzw. die Offenzeit der erfindungsgemäßen aushärtbaren Klebemassen kann durch ein Zusetzen von Offenzeitadditive eingestellt werden. Die erfindungsgemäßen aushärtbaren Klebemassen weisen bevorzugt Offenzeiten von wenigstens einer Minute, oder aber von wenigstens drei Minuten, insbesondere wenigstens fünf Minuten auf. Generell liegt der kombinierte Massenanteil der Offenzeitadditive dabei im Bereich von 0 bis 15 %, bevorzugt im Bereich von 0 bis 10 %. Typischerweise werden Polyalkohole (Polyole), die mehrere freie Hydroxylfunktionen aufweisen, wie z.B. Polyethylenglycol 400 (PEG 400), im Weiteren als "Polyol Offenzeitadditiv" bezeichnet, als Offenzeitadditiv eingesetzt. Jedoch sind auch andere Arten der Offenzeitadditive (im Weiteren als "nicht-Polyol Offenzeitadditiv" bezeichnet) bzw. Offenzeitadditive ohne frei Hydroxylfunktionen bekannt. Hierzu zählt zum Beispiel Polyethylenglykoldimethylether 500. Der retardierende Effekt der Ethergruppen auf die Aushärtung ist vergleichbar wie beim Polyol Polyethylenglycol, es handelt sich aufgrund der Methylgruppen an Anfang und Ende jedoch nicht um ein Polyol, welches mit ins Netzwerk eingebaut wird und somit die Elastizität des Epoxidnetzwerkes erhöht. Andere nicht-Polyol Offenzeitadditive sind dem Fachmann z.B. aus WO 02/61010 A2, EP 276 716 A2 und EP 661 324 A1 bekannt und können ebenso verwendet werden.

Die Erfinder haben überraschenderweise festgestellt, dass auch erfindungsgemäße aushärtbare Klebemassen, welche einen kombinierten Massenanteil von weniger als 0,9 % Polyol Offenzeitadditiv umfassen oder auch kein Polyol Offenzeitadditiv (d.h. kombinierter Massenanteil von weniger als 0.001 %) umfassen und damit frei von einem Polyol Offenzeitadditiv sind, eine ausgezeichnete Schockbeständigkeit zeigen. Daher umfassen erfindungsgemäße aushärtbare Klebemassen bevorzugt einen kombinierten Massenanteil von weniger als 0,9 % Polyol Offenzeitadditiv oder auch kein Polyol Offenzeitadditiv (d.h. kombinierter Massenanteil von weniger als 0.001 %). Um die Schockbeständigkeit weiter zu erhöhen, eignen sich nicht-Polyol Offenzeitadditive, wie beispielsweise Polyethylenglykoldimethylether 500. Bei diesen ist der retardierende Effekt der Ethergruppen auf die Aushärtung vergleichbar wie bei Polyol Offenzeitadditiven, es handelt sich jedoch aufgrund der Methylgruppen an Anfang und Ende nicht um ein Polyol, welches mit ins Polymernetzwerk eingebaut wird und somit die Elastizität des Epoxidnetzwerkes erhöht. Besonders bevorzugt sind erfindungsgemäße aushärtbare Klebemassen, welche ein nicht-Polyol Offenzeitadditiv in einem kombinierten Massenanteil im Bereich von 0,5 bis 15 % umfassen.

Besonders bevorzugt ist zusätzlich oder alternativ eine erfindungsgemäße aushärtbare Klebemasse, wobei die kombinierte Massenanteil der zweiten Epoxidverbindungen E2 größer ist als der kombinierte Massenanteil der ersten Epoxidverbindungen E1. Die Erfinder haben überraschenderweise festgestellt, dass eine höhere Menge an der festen bzw. hochviskosen, ersten Epoxidverbindung E1 nicht notwendig ist, um eine ausreichende Kohäsion (initial vor Aushärtung) zu erreichen. Häufig führen zu geringe Mengen an festen Epoxidharzen zu "matschigen" Klebemassen welche zum kohäsiven Versagen neigen. In diesem Fall wurde dies überraschenderweise nicht beobachtet und daher beträgt bevorzugt der kombinierte Massenanteil der ersten Epoxidverbindungen E1 in der aushärtbaren Klebemasse maximal 30 %, besonders bevorzugt maximal 25% und/oder liegt der kombinierte Massenanteil der ersten Epoxidverbindungen E1 in der aushärtbaren Klebemasse im Bereich von 15 bis 30 %, besonders bevorzugt im Bereich von 20 bis 25 %. In diesem Fall beträgt der kombinierte Massenanteil der zweiten Epoxidverbindungen E2 in der aushärtbaren Klebemasse 10 % oder mehr, und/oder liegt der kombinierte Massenanteil der zweiten Epoxidverbindungen E2 in der aushärtbaren Klebemasse im Bereich von 10 bis 60 %, besonders bevorzugt im Bereich von 30 bis 50 %.

Besonders vorteilhafte aushärtbare Klebemassen werden erhalten, wenn die Klebemasse zu großen Teilen aus den vorstehend aufgeführten Komponenten gebildet wird. Bevorzugt ist folglich eine erfindungsgemäße aushärtbare Klebemasse, wobei der kombinierte Massenanteil der (Meth)acrylat-Blockcopolymere, der ersten Epoxidverbindungen E1 und der zweiten Epoxidverbindungen E2 in der aushärtbaren Klebemasse 80 % oder mehr, bevorzugt 90 % oder mehr, besonders bevorzugt 95 % oder mehr, beträgt.

Über die absoluten Massenanteile hinaus konnten die Erfinder auch relative Massenverhältnisse der jeweiligen Komponenten identifizieren, die in vorteilhaften aushärtbaren Klebemassen resultieren. Bevorzugt ist nämlich eine erfindungsgemäße aushärtbare Klebemasse, wobei das Verhältnis der kombinierten Masse der (Meth)acrylat-Blockcopolymere zu der kombinierten Masse der ersten Epoxidverbindungen E1 und der zweiten Epoxidverbindungen E2 in der aushärtbaren Klebemasse im Bereich von 0,35:1 bis 4:1, bevorzugt im Bereich von 0,40:1 bis 2:1, besonders bevorzugt im Bereich von 0,45:1 bis 1,2:1, liegt. Bevorzugt ist zusätzlich oder alternativ auch eine erfindungsgemäße aushärtbare Klebemasse, wobei das Verhältnis der kombinierten Masse der ersten Epoxidverbindungen E1 zu der kombinierten Masse der zweiten Epoxidverbindungen E2 in der aushärtbaren Klebemasse im Bereich von 1:10 bis 10:1, bevorzugt im Bereich von 1:5 bis 2:1, besonders bevorzugt im Bereich von 1:3 bis 1:1, liegt. Besonders bevorzugt ist zusätzlich oder alternativ dazu eine erfindungsgemäße aushärtbare Klebemasse, wobei die kombinierte Masse der zweiten Epoxidverbindungen E2 größer ist als die kombinierte Masse der ersten Epoxidverbindungen E1. In diesem Fall liegt das Verhältnis der kombinierten Masse der ersten Epoxidverbindungen E1 zu der kombinierten Masse der zweiten Epoxidverbindungen E2 in der aushärtbaren Klebemasse im Bereich von 1:1,5 bis 1:2,5; äußerst bevorzugt ist das Verhältnis der kombinierten Masse der ersten Epoxidverbindungen E1 zu der kombinierten Masse der zweiten Epoxidverbindungen E2 1:2.

Abschließend kann es als Vorteil erfindungsgemäßer aushärtbarer Klebemassen gesehen werden, dass diese hinsichtlich des Einsatzes von typischen Additiven sehr flexibel sind, sodass die physikalisch-chemischen Eigenschaften gezielt an die Anforderungen des jeweiligen Anwendungszwecks weiter angepasst werden können. Bevorzugt ist somit eine aushärtbare Klebemasse, wobei die aushärtbare Klebemasse einen oder mehrere weitere Additive umfasst, bevorzugt in einem kombinierten Massenanteil im Bereich von 0,1 bis 50 %, bevorzugt 0,2 bis 40 %, bezogen auf die Masse der Klebemasse, und/oder wobei das eine oder die mehreren weiteren Additive bevorzugt ausgewählt sind aus der Gruppe bestehend aus Klebharzen, Alterungsschutzmitteln, Lichtschutzmitteln, UV-Absorbern und rheologischen Additiven.

Ein besonderer Fall der weiteren Komponenten, welche der Einstellung der Eigenschaften von Klebemassen dienen, sind unlösliche Füllstoffe, die der aushärtbaren Klebemasse zugesetzt werden können, um eine gefüllte aushärtbare Klebemasse zu erhalten. Bei diesen handelt es sich um partikuläre Füllstoffe mit einem mittleren Partikeldurchmesser (D50) von 5 $\mu$m oder mehr, bevorzugt 10 $\mu$m oder mehr, besonders bevorzugt 20 $\mu$m oder mehr, die in der aushärtbaren Klebemasse nicht löslich sind und in dieser entsprechend als Dispersion vorliegen sowie um makroskopische Füllstoffe wie beispielsweise Fasern. Bevorzugt sind die unlöslichen Füllstoffe ausgewählt aus der Gruppe bestehend aus partikulären Füllstoffen. Besonders bevorzugt sind die unlöslichen Füllstoffe ausgewählt aus der Gruppe bestehend aus expandierbaren Polymerhohlkugeln, nicht expandierbaren Polymerhohlkugeln, Polymervollkugeln, Glashohlkugeln, Glasvollkugeln, keramische Hohlkugeln, keramische Vollkugeln und/oder Kohlenstoffvollkugeln. In Frage kommen als unlösliche Füllstoffe beispielsweise jedoch auch Fasern, Gelege, Plättchen und Stäbchen aus in der aushärtbaren Klebemasse unlöslichen Materialien. Durch ihre teilweise schon makroskopischen Abmessungen und die fehlende Löslichkeit haben diese im Wesentlichen keinen Einfluss auf die vorstehend offenbarten Zusammenhänge der Zusammensetzungschemie der aushärtbaren Klebemassen, sondern liegen vielmehr in heterogener Mischung mit der aushärtbaren Klebemasse vor. Entsprechend werden diese unlöslichen Füllstoffe im Rahmen der vorliegenden Erfindung nicht der aushärtbaren Klebemasse zugerechnet und werden entsprechend bei der Berechnung von Massenanteilen relativ zur Masse der aushärtbaren Klebemasse nicht berücksichtigt. Wie vorstehend beschrieben, wird im Rahmen der vorliegenden Erfindung vielmehr definiert, dass der Zusatz von unlöslichen Füllstoffen zu einer erfindungsgemäßen aushärtbaren Klebemasse in einer gefüllten aushärtbaren Klebemasse resultiert, d.h. einer gefüllten aushärtbaren Klebemasse, umfassend:

x) eine erfindungsgemäße aushärtbare Klebemasse, bevorzugt wie vorstehend als bevorzugt offenbart, und

y) einen oder mehrere unlösliche Füllstoffe.

Besonders bevorzugt liegt der kombinierte Massenanteil der unlöslichen Füllstoffe dabei im Bereich von 1 bis 50 %, bevorzugt im Bereich von 2 bis 40 %, besonders bevorzugt im Bereich von 5 bis 30 %.

Für den späteren Einsatz in der Endanwendung ist es für die Handhabungseigenschaften vorteilhaft, wenn die aushärtbare Klebemasse eine intrinsische Haftklebrigkeit aufweist und somit als Haftklebemasse klassifiziert werden kann. Durch die vorteilhaft hohe Kohäsion in erfindungsgemäßen aushärtbaren Klebemassen ist es dabei besonders leicht, diese Eigenschaften in erfindungsgemäßen aushärtbaren Klebemassen einzustellen. Die Haftklebrigkeit erlaubt vor der Aushärtung der aushärtbaren Klebemassen eine zuverlässige und sichere Applikation der reaktiven Klebebänder am Substrat. Bevorzugt ist deshalb eine erfindungsgemäße aushärtbare Klebemasse, wobei die aushärtbare Klebemasse eine Haftklebemasse ist.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G') und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von $10^0$ bis $10^1$ rad/sec G' und G" jeweils zumindest zum Teil im Bereich von $10^3$ bis $10^7$ Pa liegen.

Nachfolgend werden beispielhafte aushärtbare Klebemassen offenbart, die nach Einschätzung der Erfinder besonders vorteilhaft sind und die besonders bevorzugte Merkmalskombinationen beschreiben, wobei erfindungsgemäße aushärtbare Klebemassen besonders bevorzugt sind, die zwei oder mehrere der beispielhaften aushärtbaren Klebemassen umfassen.

Bevorzugt ist zunächst eine erste erfindungsgemäße thermisch härtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 30 bis 45 %, ii) ein flüssiges Epoxid, beispielsweise Epikote828, in einem Massenanteil im Bereich von 20 bis 35 %, iii) ein festes Epoxid, beispielsweise Araldite ECN 1273, in einem Massenanteil im Bereich von 20 bis 35 %, iv) einen Härter, beispielsweise Dicyandiamid, in einem Massenanteil im Bereich von 2 bis 6 %, und v) einen Beschleuniger, beispielsweise Curezol MZ-A, in einem Massenanteil im Bereich von 0,01 bis 0,5 %.

Bevorzugt ist auch eine zweite erfindungsgemäße thermisch härtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 45 bis 60 %, ii) ein flüssiges Epoxid, beispielsweise Epikote828, in einem Massenanteil im Bereich von 15 bis 30 %, iii) ein festes Epoxid, beispielsweise Araldite ECN 1273, in einem Massenanteil im Bereich von 15 bis 30 %, iv) einen Härter, beispielsweise Dicyandiamid, in einem Massenanteil im Bereich von 2 bis 5 %, und v) einen Beschleuniger, beispielsweise Curezol MZ-A, in einem Massenanteil im Bereich von 0,01 bis 0,5 %.

Bevorzugt ist auch eine dritte erfindungsgemäße thermisch härtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 25 bis 50 %, ii) ein flüssiges Epoxid, beispielsweise Epikote828, in einem Massenanteil im Bereich von 10 bis 25 %, iii) ein festes Epoxid, beispielsweise Araldite ECN 1273, in einem Massenanteil im Bereich von 10 bis 25 %, iv) einen Härter, beispielsweise Dicyandiamid, in einem Massenanteil im Bereich von 2 bis 5 %, v) einen Beschleuniger, beispielsweise Curezol MZ-A, in einem Massenanteil im Bereich von 0,01 bis 0,5 % und vi) einen Füllstoff, beispielsweise Silibeads 5211, in einem Massenanteil von 30 %.

Bevorzugt ist auch eine vierte erfindungsgemäße thermisch härtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 25 bis 35 %, ii) ein flüssiges Epoxid, beispielsweise Epikote 828, in einem Massenanteil im Bereich von 10 bis 25 %, iii) ein festes Epoxid, beispielsweise Araldite ECN 1273, in einem Massenanteil im Bereich von 10 bis 40 %, iv) ein hochviskoses Epoxid, beispielsweise Struktol PD3611 (Viskosität bei 25 °C von mehr als 150 Pa s), in einem Massenanteil im Bereich von 10 bis 40 %, v) einen Härter, beispielsweise Dicyandiamid, in einem Massenanteil im Bereich von 2 bis 7 %, und vi) einen Beschleuniger, beispielsweise Curezol MZ-A, in einem Massenanteil im Bereich von 0,01 bis 0,7 %.

Bevorzugt ist auch eine fünfte erfindungsgemäße lichthärtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 25 bis 50 %, ii) ein flüssiges Epoxid, beispielsweise Bisphenol-A-Diglycidylether (z.B. Epikote828) oder cycloaliphatische Epoxide (z.B. Uvacure 1500) in einem Massenanteil im Bereich von 10 bis 45 %, iii) ein festes Epoxid, beispielsweise Bisphenol-A-Diglycidylether (z.B. Araldite GT 7072) oder Epoxy-Cresol bzw. Epoxy Phenol Novolake (z.B. Araldite ECN 1273), in einem Massenanteil im Bereich von 10 bis 45 %, iv) optional ein Polyol Offenzeitadditiv, beispielsweise Polyethylenglykol ($M_n$~400g/mol) oder Polycaprolacton (z.B. Capa2000), in einem Massenanteil im Bereich von 0,5 bis 15 %, insbesondere 0,5 bis 10 % oder 5 bis 15 %, und v) einen Photoinitiator, beispielsweise ein Triarylsulfonium antimonatsalz, in einem Massenanteil im Bereich von 0,3 bis 2 %., Besonders bevorzugt ist eine erfindungsgemäße lichthärtbare Klebemasse die einen kombinierten Massenanteil von weniger als 0,9 % Polyol Offenzeitadditiv vi) umfasst oder auch kein Polyol Offenzeitadditiv vi) (d.h. kombinierter Massenanteil von weniger als 0.001 %) enthält und damit frei von Polyol Offenzeitadditiv vi) ist. Besonders bevorzugt ist daher eine erfindungsgemäße lichthärtbare Klebemasse, umfassend oder bestehend, bezogen auf die Masse der Klebemasse aus: i) ein entsprechendes (Meth)acrylat-Blockcopolymer des Aufbaus A-B-A, beispielsweise Kurarity LA2140, LA2250 oder LA3320, in einem Massenanteil im Bereich von 25 bis 50 %, ii) ein flüssiges Epoxid, beispielsweise (einen gegebenenfalls hydrierten) Bisphenol-A-Diglycidylether (z.B. Epikote 828 oder HBE-100) oder cycloaliphatische Epoxide (z.B. Uvacure 1500) in einem Massenanteil im Bereich von 10 bis 45 %, iii) ein festes Epoxid, beispielsweise Bisphenol-A-Diglycidylether (z.B. Araldite GT 7072) oder Epoxy-Cresol bzw. Epoxy Phenol Novolake (z.B. Araldite ECN 1273), in einem Massenanteil im Bereich von 10 bis 45 %, und v) einen Photoinitiator, beispielsweise ein Triarylsulfoniumantimonatsalz, in einem Massenanteil im Bereich von 0,3 bis 2 %.

Bevorzugt ist auch eine sechste erfindungsgemäße lichthärtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 45 bis 70 %, ii) ein flüssiges Epoxid, beispielsweise Bisphenol-A-Diglycidylether (z.B. Epikote 828) oder cycloaliphatische Epoxide (z.B. Uvacure 1500) in einem Massenanteil im Bereich von 10 bis 45 %, iii) ein festes Epoxid, beispielsweise Bisphenol-A-Diglycidylether (z.B. Araldite GT 7072) oder Epoxy-Cresol bzw. Epoxy Phenol Novolake (z.B. Araldite ECN 1273), in einem Massenanteil im Bereich von 10 bis 45 %, iv) optional ein Polyol Offenzeitadditiv, beispielsweise Polyethylenglykol ($M_n$~400g/mol) oder Polycaprolacton (z.B. Capa2000), in einem Massenanteil im Bereich von 0,5 bis 15 %, insbesondere 0,5 bis 10 % oder 5 bis 15 %, und v) einen Photoinitiator, beispielsweise ein Triarylsulfoniumantimonatsalz, in einem Massenanteil im Bereich von 0,3 bis 2 %., Besonders bevorzugt ist eine erfindungsgemäße lichthärtbare Klebemasse die einen kombinierten Massenanteil von weniger als 0,9 % Polyol Offenzeitadditiv vi) umfasst oder auch kein Polyol Offenzeitadditiv vi) (d.h. kombinierter Massenanteil von weniger als 0.001 %) enthält und damit frei von Polyol Offenzeitadditiv vi) ist. Besonders bevorzugt ist daher eine erfindungsgemäße lichthärtbare Klebemasse, umfassend oder bestehend, bezogen auf die Masse der Klebemasse aus: i) ein entsprechendes (Meth)acrylat-Blockcopolymer des Aufbaus A-B-A, beispielsweise Kurarity LA2140, LA2250 oder LA3320, in einem Massenanteil im Bereich von 45 bis 70 %, ii) ein flüssiges Epoxid, beispielsweise (einen gegebenenfalls hydrierten) Bisphenol-A-Diglycidylether (z.B. Epikote 828 oder HBE-100) oder cycloaliphatische Epoxide (z.B. Uvacure 1500) in einem Massenanteil im Bereich von 10 bis 45 %, iii) ein festes Epoxid, beispielsweise Bisphenol-A-Diglycidylether (z.B. Araldite GT 7072) oder Epoxy-Cresol bzw. Epoxy Phenol Novolake (z.B. Araldite ECN 1273), in einem Massenanteil im Bereich von 10 bis 45 %, und v) einen Photoinitiator, beispielsweise ein Triarylsulfoniumantimonatsalz, in einem Massenanteil im Bereich von 0,3 bis 2 %.

Bevorzugt ist auch eine siebte erfindungsgemäße lichthärtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 30 bis 60 %, ii) ein flüssiges Epoxid, beispielsweise (einen gegebenenfalls hydrierten) Bisphenol-A-Diglycidylether (z.B. Epikote 828 oder HBE-100) oder cycloaliphatische Epoxide (z.B. Uvacure 1500) in einem Massenanteil im Bereich von 20 bis 45 %, iii) ein festes Epoxid, beispielsweise Bisphenol-A-Diglycidylether (z.B. Araldite GT 7072) oder Epoxy-Cresol bzw. Epoxy Phenol Novolake (z.B. Araldite ECN 1273), in einem Massenanteil im Bereich von 10 bis 40 %, iv) optional ein Polyol Offenzeitadditiv, beispielsweise Polyethylenglykol ($M_n$~400g/mol), oder ein nicht-Polyol Offenzeitadditiv, beispielsweise Polyethylenglykoldimethylether 500, in einem Massenanteil im Bereich von 0,5 bis 10 %, und v) einen Photoinitiator, beispielsweise ein Triarylsulfoniumantimonatsalz, in einem Massenanteil im Bereich von 0,3 bis 2 %. Ganz besonders bevorzugt ist, dass diese erfindungsgemäße lichthärtbare Klebemasse, einen kombinierten Massenanteil von weniger als 0,9 % Polyol Offenzeitadditiv umfasst oder kein Polyol Offenzeitadditiv (d.h. kombinierter Massenanteil von weniger als 0.001 %) enthält und damit frei von Polyol Offenzeitadditiv ist.

Bevorzugt ist auch eine achte erfindungsgemäße lichthärtbare Klebemasse, umfassend bezogen auf die Masse der Klebemasse: i) ein entsprechendes (Meth)acrylat-Blockcopolymer des Aufbaus A-B-A, beispielsweise Kurarity LA2140, LA2250 oder LA3320, in einem Massenanteil im Bereich von 30 bis 60 %, ii) ein flüssiges Epoxid (z.B. Epikote 828 oder Uvacure 1500), besonders bevorzugt einen hydrierten Bisphenol-A-Diglycidylethern oder hydrierten Bisphenol-F-Diglycidylethern (z.B. HBE-100) in einem Massenanteil im Bereich von 20 bis 50 %, iii) ein festes Epoxid, beispielsweise Bisphenol-A-Diglycidylether (z.B. Araldite GT 7072) oder Epoxy-Cresol bzw. Epoxy Phenol Novolake (z.B. Araldite ECN 1273), in einem Massenanteil im Bereich von 20 bis 40 %, iv) optional ein Polyol Offenzeitadditiv, beispielsweise Polyethylenglykol ($M_n$~400g/mol), oder ein nicht-Polyol Offenzeitadditiv, beispielsweise Polyethylenglykoldimethylether 500, in einem Massenanteil im Bereich von 0,5 bis 10 %, und v) einen Photoinitiator, beispielsweise ein Triarylsulfoniumantimonatsalz, in einem Massenanteil im Bereich von 0,3 bis 2 %. Ganz besonders bevorzugt ist, dass diese erfindungsgemäße lichthärtbare Klebemasse, einen kombinierten Massenanteil von weniger als 0,9 % Polyol Offenzeitadditiv umfasst oder kein Polyol Offenzeitadditiv (d.h. kombinierter Massenanteil von weniger als 0.001 %) enthält und damit frei von Polyol Offenzeitadditiv ist.

Erfindungsgemäße aushärtbare Klebemassen können beispielsweise direkt als Klebemassen eingesetzt werden, wobei sie je nach Applikationsmethode beispielsweise auch in Form von Bändern bereitgestellt werden können. Mit Blick auf möglichst günstige Handhabungseigenschaften werden besonders vorteilhafte Resultate jedoch regelmäßig dann erzielt, wenn erfindungsgemäße aushärtbare Klebemassen als Klebeschicht eines ein- oder doppelseitigen Klebebandes eingesetzt werden, welches zudem eine Trägerschicht umfasst. Die Erfindung betrifft somit auch ein Klebeband, insbesondere reaktives Klebeband, umfassend als Klebeschicht eine erfindungsgemäße aushärtbare Klebemasse, wobei das Klebeband bevorzugt eine Trägerschicht umfasst.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Materialien für die Trägerschicht sind beispielsweise Gewebe, Gelege und Kunststofffolien, zum Beispiel PET-Folien und Polyolefin-Folien. Die Trägerschicht kann jedoch auch selbst haftklebrig sein. Das erfindungsgemäße Klebeband kann in einer bevorzugten Ausführungsform ein doppelseitiges Klebeband sein, dessen Trägerschicht auf beiden Seiten mit einer erfindungsgemäßen aushärtbaren Klebemasse versehen ist.

In erfindungsgemäßen Klebebändern können die Klebeschichten mit einem sogenannten Releaseliner abgedeckt sein, um ein problemloses Abwickeln zu ermöglichen und die Haftklebemasse vor Verschmutzung zu schützen. Solche Releaseliner bestehen üblicherweise aus einer ein- oder beidseitig silikonisierten Kunststofffolie (z.B. PET oder PP) oder einem silikonisierten Papierträger.

Offenbart wird ausgehend von der erfindungsgemäßen aushärtbaren Klebemasse und dem erfindungsgemäßen Klebeband zudem die Verwendung einer erfindungsgemäßen aushärtbaren Klebemasse oder eines erfindungsgemäßen Klebebandes, zur Verklebung von zwei oder mehr Komponenten durch Aushärtung der aushärtbaren Klebemasse.

Offenbart wird abschließend auch ein Verfahren zur Herstellung einer erfindungsgemäßen aushärtbaren Klebemasse, umfassend die Verfahrensschritte:

a) Herstellen oder Bereitstellen eines (Meth)acrylat-Blockcopolymers des Aufbaus A-B-A, und

b) Vermischen des (Meth)acrylat-Blockcopolymers mit einer oder mehreren ersten Epoxidverbindungen E1 und einer oder mehreren zweiten Epoxidverbindungen E2 und einem oder mehreren Initiatoren, sowie optional einem oder mehreren weiteren Additiven, zum Erhalt der aushärtbaren Klebemasse.

Nachfolgend werden bevorzugte Ausführungsformen der Erfindung unter Bezugnahme auf Experimente weiter erläutert und beschrieben.

**A. Herstellung der aushärtbaren Klebemassen:**

Synthese eines statistischen Vergleichs-Co-Polymers (VP1):

Die Reaktionen wurden unter Stickstoffatmosphäre bei Raumtemperatur (25 °C) in einer EPA-Gewindeflasche mit einem Volumen von 60 ml durchgeführt. Als Strahlungsquelle dienten zwei Skymore 110W UV LED Nageltrocknerlampen mit einer Leistung von je 110 W und einer emittierten Wellenlänge von 365 nm, die so aufgestellt wurden, dass das Reaktionsgefäß mit einem Abstand von 2 cm zu den LEDs platziert werden konnte.

Eine Mischung aus 320 mg S,S-Dibenzyltrithiocarbonat (DBTTC), 16 g Methylmethacrylat (MMA, $\delta_p$ = 9,31 MPa$^{0,5}$), 24g n-Butylacrylat (BA, $\delta_p$ = 8,60 MPa$^{0,5}$) und 9 g Toluol wurde homogenisiert und anschließend für 10 min mit Stickstoff gespült. Die Polymerisation wurde durch Bestrahlung des Reaktionsgemisches gestartet. Um die Reaktion zu beenden wurde die Bestrahlung unterbrochen und das hochviskose Reaktionsgemisch in THF gelöst, tropfenweise in einem Überschuss kaltem Methanol ausgefällt und der entstandene Niederschlag filtriert. Das Molekulargewicht des statistischen Vergleichs-Co-Polymers VP1 betrug 120000 g/mol.

Herstellung der aushärtbaren Klebemassen:

Aus dem statistischen Vergleichs-Co-Polymer VP1 und einem kommerziell erhältlichen A-B-A (Meth)acrylat-Blockcopolymer mit gleicher grundsätzlicher Monomerzusammensetzung (P1, Kurarity LA2250 ($M_n$: ca. 60.000 g/mol und $M_w$: ca. 66.000 g/mol) oder P2, Kurarity LA3320 ($M_n$: ca. 108.000 g/mol und $M_w$: ca. 119.000 g/mol)), dessen A-Blöcke aus Polymethylmethacrylat ($\delta_p$ = 9,31 MPa$^{0,5}$) bestehen und dessen B-Block aus Poly-n-butylacrylat ($\delta_p$ = 8,60 MPa$^{0,5}$) besteht, wurden durch Vermischen mit den weiteren Komponenten in üblicher Weise aushärtbare Klebemassen erhalten.

Als erste Epoxidverbindungen E1 wurde ein kommerziell erhältlicher fester Bisphenol-A-Diglycidylether (E1a, D.E.R. 662E oder E1b, Araldite GT 7072) eingesetzt. Als zweite Epoxidverbindungen E2 wurde ein kommerziell erhältliches flüssiges cycloaliphatisches Epoxid (E2a, Epoxycyclohexylmethyl-3',4'-epoxycyclohexancarboxylat; Uvacure 1500) oder ein kommerziell erhältlicher flüssiger Bisphenol-A-Diglycidylether (E2b, Epikote 828 oder E2d, Araldite GY 250) oder ein kommerziell erhältlicher flüssiger hydrierter Bisphenol-A-Diglycidylether (E2c, HBE-100) eingesetzt.

Als Offenzeitadditiv wurde Polyethylenglycol 400 (PEG 400) oder Polyethylenglykoldimethylether 500 (CAS: 24991-55-7) und als Initiator Triarylsulfoniumhexafluoroantimonat (CAS: 109037-75-4) eingesetzt.

Die Zusammensetzung der Klebemassen ist in Tabelle 4 zusammengefasst. Aus den Klebemassen wurden durch Ausstriche und Verdampfen des Lösungsmittels Klebebänder mit einer Dicke von etwa 100 $\mu$m hergestellt.

Tabelle 4 - Zusammensetzung Klebemassen nebst Lösungsmittel, alle Angaben in Gewichtsteilen

|  | B1 | B2 | B3 | B4 | B5 | B6 | B7 |
|---|---|---|---|---|---|---|---|
| P1 (Kurarity LA2250) | 30 | 40 | 60 | 40 |  |  |  |
| P2 (Kurarity LA3320) |  |  |  |  | 35 | 35 | 35 |
| E1a (D.E.R. 662E) | 40 | 30 | 20 | 30 |  |  |  |
| E1b (Araldite GT 7072) |  |  |  |  | 20 | 40 | 40 |
| E2a (Uvacure 1500) | 30 | 30 |  |  |  | 25 |  |
| E2b (Epikote 828) |  |  |  | 30 |  |  |  |
| E2c (HBE-100) |  |  | 20 |  | 25 |  | 25 |
| E2d (Araldite GY 250) |  |  |  |  | 20 |  |  |
| PEG 400 | 5 | 5 | 5 | 5 |  |  |  |
| Polyethylenglycol dimethylether 500 |  |  |  |  | 5 | 5 | 5 |
| Triarylsulfonium hexafluoroantimonat | 1 | 1 | 1 | 1 | 0,5 | 0,5 | 0,5 |
| Aceton | 100 | 100 | 100 | 100 | 100 | 100 | 100 |

|  | V1 | V2 | V3 |
|---|---|---|---|
| P1 (Kurarity LA2250) |  |  | 15 |
| VP1 | 30 | 50 |  |
| E1a (D.E.R. 662E) | 40 |  | 40 |
| E2a (Uvacure 1500) | 30 | 50 |  |
| E2b (Epikote 828) |  |  | 40 |
| PEG 400 | 5 | 5 | 5 |
| Triarylsulfoniumhexafluoroantimonat | 1 | 1 | 1 |
| Aceton | 100 | 100 | 100 |

**B. Klebeexperimente:**

Die Klebkräfte wurden analog ISO 29862 (Methode 3) bei 23 °C und 50 % relativer Luftfeuchte bei einer Abzugsgeschwindigkeit von 300 mm/min und einem Abzugswinkel von 180° bestimmt. Die Dicke der Klebstoffschicht betrug dabei jeweils 100 $\mu$m. Als Verstärkungsfolie wurde eine geätzte PET-Folie mit einer Dicke von 50 $\mu$m verwendet, wie sie von der Fa. Coveme (Italien) erhältlich ist. Als Substrat wurden Stahlplatten entsprechend der Norm verwendet. Die Verklebung des unausgehärteten Messstreifens wurde dabei mittels einer Anrollmaschine mit 4 kg bei einer Temperatur von 23 °C vorgenommen. Die Klebebänder wurden sofort nach der Applikation abgezogen. Der Messwert (in N/cm) ergab sich als Mittelwert aus drei Einzelmessungen und das Versagensbild wurde wie folgt dokumentiert: adhäsiven Versagen (A) oder ein kohäsives Versagen (K).

Zudem wurde an den ausgehärteten Klebemassen die Zug-Scherfestigkeit bestimmt. Die Verklebungsfestigkeit wurde in einem dynamischen Zugscherversuch in Anlehnung an DIN-EN 1465 bei 23 °C und 50 % relativer Luftfeuchte für eine Prüfgeschwindigkeit von 1 mm/min jeweils quantitativ bestimmt (Ergebnisse in N/mm$^2$ = MPa). Als Prüfstäbe kamen solche aus Stahl zum Einsatz, welche vor der Verklebung mit Aceton gereinigt wurden. Die Schichtdicken der Klebebänder entsprachen jeweils den obigen Angaben. Dabei wurden die Klebebänder vor dem Zusammenfügen der Prüfstäbe nach dem Abziehen des zweiten Liners mittels geeignetem Licht bestrahlt und die Prüfkörper unmittelbar danach zusammengefügt. Die Messung erfolgte nach 7 Tagen Lagerung bei 23 °C und 50 % relativer Luftfeuchte. Angegeben ist der Mittelwert aus drei Messungen.

Zudem wurde die Schockbeständigkeit der ausgehärteten Klebemassen untersucht. Der hierfür eingesetzte Schock-Test ermöglicht es, Aussagen über die Verklebungsfestigkeit eines Klebeprodukts in Richtung der Klebschichtnormalen zu treffen. Hierfür werden ein kreisförmiges erstes Substrat (1) (Polycarbonat, Makrolon 099, Dicke 3 mm) mit einem Durchmesser von 21 mm, ein zweites Substrat (2) (Polycarbonat, Makrolon 099, Dicke 3 mm), welches quadratförmig mit 40 mm Seitenlänge ausgeführt ist und welches eine kreisförmige, zentral angeordnete Öffnung (Bohrung) von 9 mm Durchmesser aufweist, sowie die zu untersuchenden Klebefilmproben, die ebenfalls kreisförmig mit 21 mm Durchmesser konfektioniert (zugeschnitten oder gestanzt) wurden, bereitgestellt.

Aus den entsprechenden drei Bauteilen wird ein Prüfkörper hergestellt, indem zunächst die Klebefilmprobe mit der freien Oberfläche passgenau auf das Substrat (1) verklebt wird. Dann wird die temporäre Schutzfolie (silikonisierter PET-Liner) entfernt und die aushärtbare Klebemasse mit durch Bestrahlung mit mindestens 1000 mJ/cm$^2$ einer 365nm UV-LED aktiviert. Der so erzeugte Verbund wird anschließend mit der nunmehr freiliegenden Seite des Klebeproduktes innerhalb von 2 Minuten konzentrisch auf das Substrat 2 appliziert, also derart, dass die kreisrunde Aussparung des Substrats 2 genau mittig über dem kreisrunden ersten Substrat 1 angeordnet ist (Verklebungsfläche somit 282 mm$^2$) und mit einem Kraft von mindestens 280 N für mindestens 10 s verpresst, wobei der Prüfkörper entsteht.

Nach dem Verpressen werden die Prüfkörper für 72 Stunden bei 23 °C und 50 % relativer Feuchte konditioniert.

Nach der entsprechenden Lagerung werden die Prüfkörper jeweils in eine Probenhalterung gespannt, so dass der Verbund waagerecht ausgerichtet ist. Der Prüfkörper wird dabei mit der Polycarbonatscheibe (Substrat 1) nach unten in die Probenhalterung eingelegt. Die Probenhalterung wird anschließend in die vorgesehene Aufnahme der verwendeten Vorrichtung ("DuPont Impact Tester", Fa. Cometech, TAIWAN, Model QC-641) zentrisch eingesetzt. Der Schlagkopf wird so eingesetzt, dass die kreisförmige abgerundete Aufschlaggeometrie mit dem Durchmesser von 5 mm auf der Verklebungsseite des Substrats 1 zentrisch und bündig aufliegt. Auf den derart präparierten Verbund aus Probenhalterung, Prüfkörper und Schlagkopf wird senkrecht ein an zwei Führungsstangen geführtes Gewicht (Schlitten) mit einer Masse von 307 g aus einer Höhe von zunächst 5 cm fallengelassen (Messbedingungen: 23 °C, 50 % relative Feuchte). Die Höhe des Fallgewichtes (h) wird in 5 cm Schritten so lange erhöht, bis die eingebrachte Stoßenergie die Prüfkörper durch die Schlagbelastung zerstört und die Polycarbonatscheibe (Substrat 1) sich von der Grundplatte (Substrat 2) löst. Um Versuche mit unterschiedlichen Prüfkörpern vergleichen zu können, wird die Energie wie folgt berechnet:

$$\text{DuPont Schock [mJ/cm}^2\text{]} = (\text{m(Schlitten) [kg]} * 9{,}81 \text{ [kg/m*s}^2\text{]} * h \text{ [m]}) / A(\text{Verklebungsfläche) [cm}^2\text{]}.$$

Es werden fünf Proben pro Klebemasse getestet und der Mittelwert der berechneten Energie als Kennzahl für die Schlagzähigkeit angegeben. Die Ergebnisse der Experimente sind in Tabelle 5 zusammengefasst.

Tabelle 5 - Zusammenfassung der Klebeexperimente

| | B1 | B2 | B3 | B4 | V1 | V2 | V3 |
|---|---|---|---|---|---|---|---|
| Bruchbild* / Klebkraft | A (>1 N/cm) | A (>1 N/cm) | A (>1 N/cm) | A (>1 N/cm) | K | K | K |
| Zug-Schertest / MPa | >4 | >4 | >5 | >4 | >4 | >4 | >>4 |
| Schock (PC-PC) / mJ/cm$^2$ | >200 | >200 | >200 | >200 | <50 | <100 | <150 |
| * A: adhäsives Versagen; K: kohäsives Versagen | | | | | | | |

| | B5 | B6 | B7 |
|---|---|---|---|
| Bruchbild* / Klebkraft | A (>1 N/cm) | A (>1 N/cm) | A (>1 N/cm) |
| Zug-Schertest / MPa | >5 | >4 | >5 |
| Schock (PC-PC) / mJ/cm$^2$ | >250 | >250 | >250 |

Anhand des Bruchbildes im Klebkrafttest lässt sich der vorteilhafte kohäsionssteigernde Effekt der (Meth)acrylat-Blockcopolymere, die in erfindungsgemäßen Klebemassen zum Einsatz kommen, belegen, vorteilhafterweise auch beim Einsatz von großen Mengen an Reaktivharz. Zudem zeigen die Experimente, dass mit (Meth)acrylat-Blockcopolymeren in Kombination mit spezifischen Reaktivharzen reaktive Klebstoffe mit deutlich verbesserter Schockbeständigkeit erhältlich sind. Hierbei zeigen die Beispiele B5 bis B7, dass sich die Schockbeständigkeit durch den Einsatz von höhermolekularen (Meth)acrylat-Blockcopolymeren (wie Kurarity LA3320) in den erfindungsgemäßen Klebmassen verbessern lässt. Dieser Effekt lässt sich vielleicht nicht nur auf das höhere Molekulargewicht von LA3320 (Mw: ca. 119.000 g/mol) im Vergleich zu LA2250 (Mw: ca. 66.000 g/mol LA2250) zurückführen. Ohne an eine bestimmte Theorie gebunden zu sein, glauben die Erfinder, dass möglicherweise in LA3320 der niedrigere Hardblockanteil von knapp unter 20% MMA kombiniert mit dem erhöhten Molekulargewicht dazu führen, dass der Mittelblock im ausgehärteten Epoxidklebeband besser phasensepariert vorliegt und somit einen stärkeren positiven Einfluss auf die Schockperformance hat. In weiteren Versuchen haben die Erfinder festgestellt, dass dieser überraschende Effekt sogar im Vergleich der noch ähnlicheren LA2330 und LA3320 auftritt und zu einer Verbesserung der Schockbeständigkeit (mehr als 50 mJ/cm$^2$) führt.

Im Vergleich zum Stand der Technik wurde überraschend gefunden, dass sich in erfindungsgemäßen aushärtbaren Klebemassen deutlich größere Mengen an (Meth)acrylat-Blockcopolymer hervorragend dazu eignen, sowohl im unausgehärteten Zustand gute Haftklebstoffe (adhäsives Versagen im Klebkrafttest), als auch starke Verklebungen im ausgehärteten Zustand zu erzielen. Werden dem Fachmann aus anderen Klebemassensystemen prinzipiell bekannte Mengen an (Meth)acrylat-Blockcopolymer eingesetzt, wie in V3 gezeigt, so werden eher pastöse Klebstoffe erhalten, die sich nicht als Haftklebstoff eignen.

Die Zug-Schertests nach Aushärtung zeigen, dass die erfindungsgemäßen Klebemassen aushärten und dabei gute Verklebungsfestigkeiten erzielt werden können, was für ein ausreichendes Auffließverhalten spricht. Der Vorteil der erfindungsgemäßen Klebemassen zeigt sich insbesondere in der positiven Kombination der Eigenschaften vor und nach der Aushärtung.

Außerdem zeigen die Beispiele B3, B5 und B7 anschaulich, dass hydrierte Epoxidverbidungen in den erfindungsgemäßen Klebemassen zu höheren Verklebungsfestigkeiten führen.

## Patentansprüche

1. Aushärtbare Klebemasse, umfassend bezogen auf die Masse der aushärtbaren Klebemasse:

   a) ein oder mehrere (Meth)acrylat-Blockcopolymere des Aufbaus A-B-A in einem kombinierten Massenanteil von 25 % oder mehr,

   wobei die A-Blöcke unabhängig voneinander für ein Poly(meth)acrylat mit einer Glasübergangstemperatur Tg von 50 °C oder mehr stehen, das herstellbar ist durch Polymerisation einer A-Monomerzusammensetzung aus A-Monomeren,
   wobei der B-Block für ein Poly(meth)acrylat mit einer Glasübergangstemperatur Tg von weniger als 50 °C steht, das herstellbar ist durch Polymerisation einer B-Monomerzusammensetzung aus B-Monomere,

   b) eine oder mehrere polymerisierbare erste Epoxidverbindungen E1 in einem kombinierten Massenanteil von 5 % oder mehr, wobei die erste Epoxidverbindung E1 bei 25 °C ein Feststoff oder ein hochviskoser Stoff mit einer dynamische Viskosität von 50 Pa s oder mehr ist, und
   c) eine oder mehrere polymerisierbare zweite Epoxidverbindungen E2 in einem kombinierten Massenanteil von 5 % oder mehr, wobei die zweite Epoxidverbindung E2 bei 25 °C eine Flüssigkeit mit einer dynamischen Viskosität von 40 Pa s oder weniger ist,

   wobei der stoffmengengewichtete polare Anteil der Hansen-Löslichkeitsparameter $<\delta_p>$ der von A-Monomeren abgeleiteten Monomereinheiten in den A-Blöcken $<\delta_p>$(A) im Bereich von 9,0 bis 11,0 MPa$^{0,5}$ liegt, und
   wobei der stoffmengengewichtete polare Anteil der Hansen-Löslichkeitsparameter $<\delta_p>$ der von B-Monomeren abgeleiteten Monomereinheiten in den B-Blöcken $<\delta_p>$(B) weniger als 9 MPa$^{0,5}$ beträgt.

2. Aushärtbare Klebemasse nach Anspruch 1, wobei der stoffmengengewichtete polare Anteil der Hansen-Löslichkeitsparameter $<\delta_p>$ der von A-Monomeren abgeleiteten Monomereinheiten in den A-Blöcken $<\delta_p>$(A) im Bereich von 9,1 bis 10,0 MPa$^{0,5}$, bevorzugt im Bereich von 9,2 bis 9,5 MPa$^{0,5}$, besonders bevorzugt im Bereich von 9,3 bis 9,4 MPa$^{0,5}$, liegt.

3. Aushärtbare Klebemasse nach einem der Ansprüche 1 oder 2, wobei der stoffmengengewichtete polare Anteil der Hansen-Löslichkeitsparameter $<\delta_p>$ der von B-Monomeren abgeleiteten Monomereinheiten in den B-Blöcken $<\delta_p>$(B) im Bereich von 6,0 bis 8,9 MPa$^{0,5}$ bevorzugt im Bereich von 6,5 bis 8,8 MPa$^{0,5}$, besonders bevorzugt im Bereich von 7,0 bis 8,7 MPa$^{0,5}$, liegt.

4. Aushärtbare Klebemasse nach einem der Ansprüche 1 bis 3, wobei die A-Monomerzusammensetzung ein oder mehrere A-Monomere umfasst, die ausgewählt sind aus der Gruppe bestehend aus Methylmethacrylat, Ethylacrylat, Methylacrylat, 2-Phenoxydiethylenglocolacrylat und t-Butylacrylat.

5. Aushärtbare Klebemasse nach einem der Ansprüche 1 bis 4, wobei die B-Monomerzusammensetzung ein oder mehrere B-Monomere umfasst, die ausgewählt sind aus der Gruppe bestehend aus n-Butylacrylat, 2-Ethylhexylacrylat, n-Octylacrylat, Isobornylacrylat, 2-Phenoxyethylacrylat, Propylheptylacrylat und Acrylsäure.

6. Aushärtbare Klebemasse nach einem der Ansprüche 1 bis 5, wobei der kombinierte Massenanteil der (Meth)acrylat-Blockcopolymere in der aushärtbaren Klebemasse 28 % oder mehr, bevorzugt 30 % oder mehr, besonders bevorzugt 33 % oder mehr, beträgt.

7. Aushärtbare Klebemasse nach einem der Ansprüche 1 bis 6, wobei der kombinierte Massenanteil der ersten Epoxidverbindungen E1 in der aushärtbaren Klebemasse 10 % oder mehr, bevorzugt 15 % oder mehr, besonders bevorzugt 20 % oder mehr, beträgt.

8. Aushärtbare Klebemasse nach einem der Ansprüche 1 bis 7, wobei der kombinierte Massenanteil der zweiten Epoxidverbindungen E2 in der aushärtbaren Klebemasse 10 % oder mehr, bevorzugt 20 % oder mehr, besonders bevorzugt 30 % oder mehr, beträgt.

9. Aushärtbare Klebemasse nach einem der Ansprüche 1 bis 8, wobei die eine oder die mehreren ersten Epoxidverbindungen E1 und/oder die eine oder die mehreren zweiten Epoxidverbindungen E2 ausgewählt sind aus der Gruppe bestehend aus Epoxidverbindungen mit zumindest einer cycloaliphatischen Gruppe, insbesondere einer Cyclohexylgruppe oder Dicyclopentadienylgruppe.

10. Klebeband, umfassend als Klebeschicht eine aushärtbare Klebemasse nach einem der Ansprüche 1 bis 9.

**Claims**

1. Curable adhesive comprising, based on the mass of the curable adhesive:

   a) one or more (meth)acrylate block copolymers of the structure A-B-A in a combined mass fraction of 25% or more,

   where the A blocks independently of one another stand for a poly(meth)acrylate having a glass transition temperature Tg of 50°C or more which is preparable by polymerization of an A monomer composition composed of A monomers,
   where the B block stands for a poly(meth)acrylate having a glass transition temperature Tg of less than 50°C which is preparable by polymerization of a B monomer composition composed of B monomers,

   b) one or more polymerizable first epoxide compounds E1 in a combined mass fraction of 50 or more, where the first epoxide compound E1 at 25°C is a solid or a high-viscosity substance having a dynamic viscosity of 50 Pa s or more, and
   c) one or more polymerizable second epoxide compounds E2 in a combined mass fraction of 50 or more, where the second epoxide compound E2 at 25°C is a liquid having a dynamic viscosity of 40 Pa s or less,

   where the amount-of-substance-weighted polar component of the Hansen solubility parameters $<\delta_p>$ of the monomer units derived from A monomers in the A blocks, $<\delta_p>$(A), is in the range from 9.0 to 11.0 $MPa^{0.5}$, and
   where the amount-of-substance-weighted polar component of the Hansen solubility parameters $<\delta_p>$ of the monomer units derived from B monomers in the B blocks, $<\delta_p>$(B), is less than 9 $MPa^{0.5}$.

2. Curable adhesive according to Claim 1, where the amount-of-substance-weighted polar component of the Hansen solubility parameters $<\delta_p>$ of the monomer units derived from A monomers in the A blocks, $<\delta_p>$(A), is in the range from 9.1 to 10.0 $MPa^{0.5}$, preferably in the range from 9.2 to 9.5 $MPa^{0.5}$, more preferably in the range from 9.3 to 9.4 $MPa^{0.5}$.

3. Curable adhesive according to either of Claims 1 and 2, where the amount-of-substance-weighted polar component of the Hansen solubility parameters $<\delta_p>$ of the monomer units derived from B monomers in the B blocks, $<\delta_p>$ (B), is in the range from 6.0 to 8.9 $MPa^{0.5}$, preferably in the range from 6.5 to 8.8 $MPa^{0.5}$, more preferably in the range from 7.0 to 8.7 $MPa^{0.5}$.

4. Curable adhesive according to any of Claims 1 to 3, where the A monomer composition comprises one or more A monomers which are selected from the group consisting of methyl methacrylate, ethyl acrylate, methyl acrylate, 2-phenoxydiethylene glycol acrylate and tert-butyl acrylate.

**5.** Curable adhesive according to either of Claims 1 to 4, where the B monomer composition comprises one or more B monomers which are selected from the group consisting of n-butyl acrylate, 2-ethylhexyl acrylate, n-octyl acrylate, isobornyl acrylate, 2-phenoxyethyl acrylate, propylheptyl acrylate and acrylic acid.

**6.** Curable adhesive according to any of Claims 1 to 5, where the combined mass fraction of the (meth)acrylate block copolymers in the curable adhesive is 280 or more, preferably 30% or more, more preferably 33% or more.

**7.** Curable adhesive according to any of Claims 1 to 6, where the combined mass fraction of the first epoxide compounds E1 in the curable adhesive is 10% or more, preferably 15% or more, more preferably 20% or more.

**8.** Curable adhesive according to any of Claims 1 to 7, where the combined mass fraction of the second epoxide compounds E2 in the curable adhesive is 10% or more, preferably 20% or more, more preferably 30% or more.

**9.** Curable adhesive according to any of Claims 1 to 8, where the one or the two or more first epoxide compounds E1 and/or the one or the two or more second epoxide compounds E2 are selected from the group consisting of epoxide compounds having at least one cycloaliphatic group, more particularly a cyclohexyl group or dicyclopentadienyl group.

**10.** Adhesive tape comprising as adhesive layer a curable adhesive according to any of Claims 1 to 9.

**Revendications**

**1.** Matière adhésive durcissable, comprenant par rapport à la masse de la matière adhésive durcissable :

a) un ou plusieurs copolymères à blocs (méth)acrylate de structure A-B-A en une proportion en masse combinée de 25 % ou plus,

les blocs A représentant indépendamment l'un de l'autre un poly(méth)acrylate ayant une température de transition vitreuse Tg de 50 °C ou plus, qui peut être préparé par polymérisation d'une composition de monomères A à base de monomères A,
le bloc B représentant un poly(méth)acrylate ayant une température de transition vitreuse Tg de moins de 50 °C, qui peut être préparé par polymérisation d'une composition de monomères B à base de monomères B,

b) un ou plusieurs premiers composés époxyde polymérisables E1 en une proportion en masse combinée de 5 % ou plus, le premier composé époxyde E1 étant à 25 °C un solide ou une substance hautement visqueuse ayant une viscosité dynamique de 50 Pa.s ou plus, et
c) un ou plusieurs deuxièmes composés époxyde polymérisables E2 en une proportion en masse combinée de 5 % ou plus, le deuxième composé époxyde E2 étant à 25 °C un liquide ayant une viscosité dynamique de 40 Pa.s ou moins,

dans laquelle la fraction polaire pondérée en quantité de matière des paramètres de solubilité de Hansen $<\delta_p>$ des unités monomères dérivées de monomères A dans les blocs A $<\delta_p>$(A) se situe dans la plage de 9,0 à 11,0 $MPa^{0,5}$, et
dans laquelle la fraction polaire pondérée en quantité de matière des paramètres de solubilité de Hansen $<\delta_p>$ des unités monomères dérivées de monomères B dans les blocs B $<\delta_p>$(B) vaut moins de 9 $MPa^{0,5}$.

**2.** Matière adhésive durcissable selon la revendication 1, dans laquelle la fraction polaire pondérée en quantité de matière des paramètres de solubilité de Hansen $<\delta_p>$ des unités monomères dérivées de monomères A dans les blocs A $<\delta_p>$ (A) se situe dans la plage de 9,1 à 10,0 $MPa^{0,5}$, de préférence dans la plage de 9,2 à 9,5 $MPa^{0,5}$, de façon particulièrement préférée dans la plage de 9,3 à 9,4 $MPa^{0,5}$.

**3.** Matière adhésive durcissable selon l'une quelconque des revendications 1 et 2, dans laquelle la fraction polaire pondérée en quantité de matière des paramètres de solubilité de Hansen $<\delta_p>$ des unités monomères dérivées de monomères B dans les blocs B $<\delta_p>$B se situe dans la plage de 6,0 à 8,9 $MPa^{0,5}$, de préférence dans la plage de 6,5 à 8,8 $MPa^{0,5}$, de façon particulièrement préférée dans la plage de 7,0 à 8,7 $MPa^{0,5}$.

**4.** Matière adhésive durcissable selon l'une quelconque des revendications 1 à 3, dans laquelle la composition de monomères A comprend un ou plusieurs monomères A qui sont choisis dans le groupe constitué par le méthacrylate de méthyle, l'acrylate d'éthyle, l'acrylate de méthyle, l'acrylate de 2-phénoxy-diéthylèneglycol et l'acrylate de tert-butyle.

5. Matière adhésive durcissable selon l'une quelconque des revendications 1 à 4, dans laquelle la composition de monomères B comprend un ou plusieurs monomères B qui sont choisis dans le groupe constitué par l'acrylate de n-butyle, l'acrylate de 2-éthyl-hexyle, l'acrylate de n-octyle, l'acrylate d'isobornyle, l'acrylate de 2-phénoxyéthyle, l'acrylate de propylheptyle et l'acide acrylique.

6. Matière adhésive durcissable selon l'une quelconque des revendications 1 à 5, dans laquelle la proportion en masse combinée des copolymères à blocs (méth)acrylate dans la matière adhésive durcissable est de 28 % ou plus, de préférence 30 % ou plus, de façon particulièrement préférée 33 % ou plus.

7. Matière adhésive durcissable selon l'une quelconque des revendications 1 à 6, dans laquelle la proportion en masse combinée des premiers composés époxyde E1 dans la matière adhésive durcissable est de 10 % ou plus, de préférence 15 % ou plus, de façon particulièrement préférée 20 % ou plus.

8. Matière adhésive durcissable selon l'une quelconque des revendications 1 à 7, dans laquelle la proportion en masse combinée des deuxièmes composés époxyde E2 dans la matière adhésive durcissable est de 10 % ou plus, de préférence 20 % ou plus, de façon particulièrement préférée 30 % ou plus.

9. Matière adhésive durcissable selon l'une quelconque des revendications 1 à 8, dans laquelle ledit un ou lesdits plusieurs premiers composés époxyde E1 et/ou ledit un ou lesdits plusieurs deuxièmes composés E2 sont choisis dans le groupe constitué par les composés époxyde comportant au moins un groupe cycloaliphatique, en particulier un groupe cyclohexyle ou un groupe dicyclopentadiényle.

10. Ruban adhésif, comprenant en tant que couche adhésive une matière adhésive durcissable selon l'une quelconque des revendications 1 à 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006042816 A1
- DE 102019103120 A1
- DE 102015222028 A1
- EP 3091059 A1
- EP 3126402 B1
- EP 2768919 B1
- DE 102018203894 A1
- WO 2017174303 A1
- US 4661542 A
- US 2011003947 A1
- US 20080200589 A1
- US 2007078236 A1
- US 2012196952 A1
- US 2016032157 A1
- US 2008146747 A1
- US 2016230054 A1
- EP 2832811 A1
- WO 2019106194 A1
- WO 2019229150 A1
- US 3117099 A
- US 3018262 A
- US 6908722 B1
- US 3729313 A
- US 3741769 A
- US 4250053 A
- US 4394403 A
- US 4231951 A
- US 4256828 A
- US 4058401 A
- US 4138255 A
- US 2010063221 A1
- EP 0542716 B1
- WO 0261010 A2
- EP 276716 A2
- EP 661324 A1
- WO 2015189323 A

**In der Beschreibung aufgeführte Nicht-Patentliteratur**

- **CHARLES M. HANSEN.** Hansen Solubility Parameters: A User's Handbook. CRC Press, 2007
- Prediction of Hansen Solubility Parameters with a New Group-Contribution Method. *Int. J. Thermophys.,* 2008, vol. 29, 568-585
- Prediction of Hansen Solubility Parameters with a New Group-Contribution Method. *Int. J. Thermophys,* 2008, 578-582
- **2010 ; A.W. GREEN.** *Industrial Photoinitiators: A technical guide*
- Satas, Handbook of Pressure Sensitive Adhesives Technology. 1999, 153-203
- *CHEMICAL ABSTRACTS,* 24991-55-7
- *CHEMICAL ABSTRACTS,* 109037-75-4